# EUROPEAN PATENT APPLICATION

(11) **EP 4 585 373 A1**
(43) Date of publication of application: **16.07.2025**
(21) Application number: 23863523.9
(22) Date of filing: 07.09.2023
(51) Int. Cl.: B25J 9/00, B25J 5/00, B25J 9/08, B25J 11/00, B25J 19/00, B62D 57/028, G06F 3/14

(54) **ROBOT**

(30) Priority: 07.09.2022 KR 20220113301; 25.04.2023 KR 20230054228
(71) Applicant: LG Electronics Inc., Yeongdeungpo-gu Seoul 07336 (KR)
(72) Inventor: CHOI, Dongkyu, Seoul 08592 (KR); KIM, Seongmin, Seoul 08592 (KR); KIM, Jinju, Seoul 08592 (KR)
(74) Representative: Vossius & Partner Patentanwälte Rechtsanwälte mbB
(86) International application number: PCT/KR2023/013410
(87) International publication number: WO 2024/054059

(57) **Abstract**

There is disclosed a robot including a robot body configured to accommodate a motor and a battery; a leg part coupled to the robot body and configured to support the root body by being provided in pairs; a wheel coupled to the leg part and configured to come into contact with the ground; and one arm pivotably coupled to both lateral surfaces of the robot body, so that the robot may implement various operations such as touching the ground by rotating the arm and it may be coupled to the function module to expand and change the functions.

## Description

### [BACKGROUND]

### [Technical Field]

Embodiments of the present invention relate to a robot, more particularly, a robot that may provide various services based on commands input by a user.

### [Background of the Invention]

Recently, with advancement of robot technology, the use of robots is increasing not only in the industrial field but also at home.

Home robots include robots that perform tasks inside the home such as helping with housework like cleaning or controlling electric hole appliances, robots that use artificial intelligence AI to act as secretaries or provide education to users, or robots that replace pets.

However, conventional home robots have limitations in that they can only perform one of the above functions and cannot perform various functions depending on the user's needs or situations.

Meanwhile, robots exist not only as robots that perform their functions while remaining fixed in a specific location but also mobile robots that can move. In particular, for robots used in the home mobile robots that can move around the housing on behalf of the user or follow the user are mainly used.

Among mobile robots, two-wheeled robots have the advantage of being easy to store as they occupy a small area of land, and the advantage of being easy to use in the home with relatively narrow spaces as they have a small turning radius when changing direction.

Meanwhile, US Patent Publication No. US 2020-0362972A1 (November 19, 2020) discloses a mobile robot that moves using a pair of legs provided with wheels.

The mobile robot can lift an object by using its arm and move by rotating the wheels provided on the pair of legs.

However, the arm of the above-mentioned mobile robot only has the function of lifting objects, and there is a limitation that the robot's functions cannot be expanded by using the arm.

In addition, the mobile robot has a main body to which the legs are coupled, and the main body is configured to rotate in a pendulum shape so as to maintain balance while moving or stationary. The mobile robot maintains balance by rotating a counterbalance in response to the rotation of the main body.

Accordingly, the above-mentioned mobile robot must operate a motor to continuously rotate the wheels and counterweights so as to maintain a stable posture. In this case, the mobile robot has the limitation that it must continuously consume electric energy even when the robot is stopped in place or waiting.

Meanwhile, Japanese Registered Utility Model No. JP3136601U (October 10, 2007) discloses a walking toy that can raise its body.

The walking toy can raise its body by rotating its two arms and two legs while lying on the ground.

However, the walking toy has the two arms that are separate and each touches the ground separately, thereby having a limitation in that it cannot maintain a posture while supporting its body.

In addition, the walking toy has no structure in which the arms can be coupled to other objects, so there is a limitation in that the walking toy cannot add functions

### [DETAILED DESCRIPTION OF THE INVENTION]

### [Technical Problem]

Accordingly, one object of the present invention is to solve the above-noted disadvantages of the prior art, and to provide a robot with arms that may perform various functions based on the situation or the user's commands.

Another object of the present invention is to provide a robot that may change a function in use to a new function, or may add a new function to a function inside.

A further object of the present invention is to provide a robot that may minimize power consumption while standing still or in standby.

A still further object of the present invention is to provide a robot that may stand up from a fallen state by pushing off the ground.

A still further object of the present invention is to provide a robot that may express its emotions by expressing facial expressions and movements depending on the situation.

A still further object of the present invention is to provide a robot that may change its display based on the shape of a display cover.

### [Technical Solution]

To solve the objects of the present invention, a robot may include a robot body configured to accommodate a motor and a battery; a leg part coupled to the robot body and configured to support the root body by being provided in pairs; a wheel coupled to the leg part and configured to come into contact with the ground; and one arm pivotably coupled to both lateral surfaces of the robot body.

At this time, the arm may include a rotation coupling portion rotatably coupled to each lateral surface of the robot body, and a connecting portion configured to connect the pair of rotation coupling portions to each other.

In the arm, the rotation coupling portion and the connecting portion may be integrally rotated with respect to the rotation coupling portion as a rotation axis.

The arm may be detachably coupled to a function module coupled to the robot body and configured to provide a function to the robot body.

A connection terminal electrically connected to the function module may be disposed in the connecting portion.

A detachable portion detachably coupled to the function module may be disposed in the connecting portion.

The arm may be configured to support the robot body by coming into contact with the ground.

The leg part may include a first link linked to the robot body; a second link linked to the robot body; and a third link linked to the first link and the second link and coupled to the wheel part.

At this time, the radius of rotation of the arm may be longer than the maximum length of the first link and shorter than the maximum length of the leg part.

Meanwhile, when the robot falls down and at least a portion of the robot body comes into contact with the ground, the arm and the wheel may be rotated to lift the robot body.

When at least a portion of the third link comes into contact with the ground, the arm and the wheel are rotated to lift the robot body.

The robot may further include a display disposed in the robot body and configured to display the status of the robot; and a robot mask detachably coupled to the robot body and configured to cover the display.

The display may be configured to change the shape displayed while the mask is coupled based on the shape of the mask.

The robot mask may include a mask function unit provided in the mask body and configured to provide a function to the robot body when coupled to the robot body.

### [Advantageous Effects]

According to the present invention described above, the robot may implement various operations by rotating one arm pivotably coupled to both sides of the robot body, thereby expanding and changing the function of the robot.

Furthermore, the robot may couple the function module to the front portion or the rear portion of the robot body based on the user's command or situations, thereby implementing various functions through the function module.

Still further, the function module may be coupled to the lower portion of the robot body based on the user's command or situations, thereby implementing various functions through the function module.

Still further, the robot mask detachably coupled to the robot body may be replaceable, thereby changing the design of the robot or adding a new function.

Still further, the space where the function module may be mounted may be formed between the pair of wheels and the leg part, thereby not significantly increasing the overall volume even if the robot body and the function module are coupled to each other.

Still further, when the function module is coupled to the robot body, the function module may also come into contact with the ground, thereby maintaining the balance of the robot easily.

Still further, when the robot is stationary, the rotation of the wheel may be stopped and the arm may be configured to rotate and touch the ground, thereby minimizing power consumption due to the driving of the wheel.

Still further, while the robot has fallen, the arm may touch the ground so that the robot can stand up more stably, thereby maintaining balance.

### [Description of Drawings]

FIGS. 1a and 1b are perspective views to describe a robot according to one embodiment of the present invention;
FIGS. 2a and 2b are front views of a robot according to one embodiment of the present invention;
FIG. 3 is a side view of a robot according to one embodiment of the present invention;
FIG. 4 is a rear view of a robot according to one embodiment of the present invention;
FIG. 5 is a plane view of a robot a robot according to one embodiment of the present invention;
FIG. 6 is a bottom view of a robot a robot according to one embodiment of the present invention;
FIG. 7 is a perspective view of a robot a robot according to one embodiment of the present invention at a different angle;
FIG. 8 is a partially cut away view to describe power transmission to rotate arms in a robot according to one embodiment of the present invention;
FIG. 9 is a plane view of a robot according to one embodiment of the present invention;
FIG. 10 is a view to describe an arm of a robot according to another embodiment of the present invention;
FIG. 11 is a view to describe a state in which a detachable part of an arm shown in FIG. 10 is rotated;
FIG. 12 is a bottom view to describe an example that a charging terminal is provided in a robot according to one embodiment of the present invention;
FIGS. 13a and 13b are views to describe the structure in which the rotation of an arm is restricted;
FIGS. 14a and 14b are views to describe another example of FIGS. 13a and 13b;
FIG. 15 is a view to describe a state in which a robot according to one embodiment is in standby without moving;
FIG. 16 is a side view of FIG. 15;
FIGS. 17a and 17b are views to describe the motion that occurs when the robot according to one embodiment of the present invention falls forward;
FIGS. 18a and 18b are views to describe the motion that occurs the robot according to one embodiment of the present invention falls backward;
FIGS. 19 and 20 are views to describe a state in which a robot according to one embodiment of the present invention is coupled to a function module;
FIG. 21 is a perspective view to describe a function module in a robot according to one embodiment of the present invention;
FIG. 22 is a view to describe a state in which a robot body is coupled to a function module in a robot according to one embodiment of the present invention;
FIGS. 23a and 23b are views to describe the coupling relationship between a robot mask and a robot body in a robot according to one embodiment of the present invention;
FIG. 24 is a view to describe a state in which a robot mask is separated in a robot according to one embodiment of the present invention;
FIG. 25 is a view to describe the structure of a robot mask in a robot according to one embodiment of the present invention;
FIGS. 26 to 29 are views to describe a state in which various functions are added to a robot mask in a robot according to one embodiment of the present invention; and
FIG. 30 is a block view to describe the control configuration of a robot according to one embodiment of the present invention.

### [DESCRIPTION OF SPECIFIC EMBODIMENTS]

Referring to the accompanying drawings, embodiments of the present invention will be described in detail.

Description will now be given in detail according to exemplary embodiments disclosed herein, with reference to the accompanying drawings. For the sake of brief description with reference to the drawings, the same components may be provided with the same reference numbers, and description thereof will not be repeated.

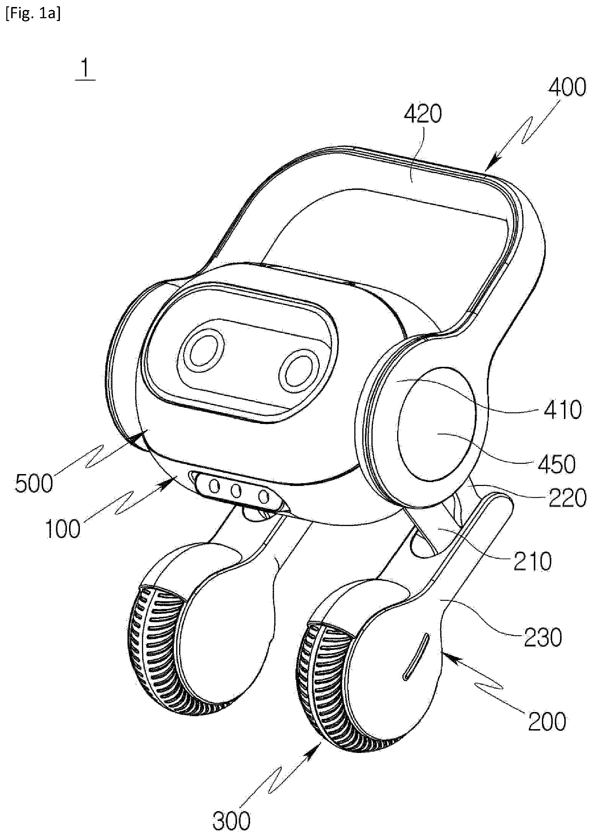

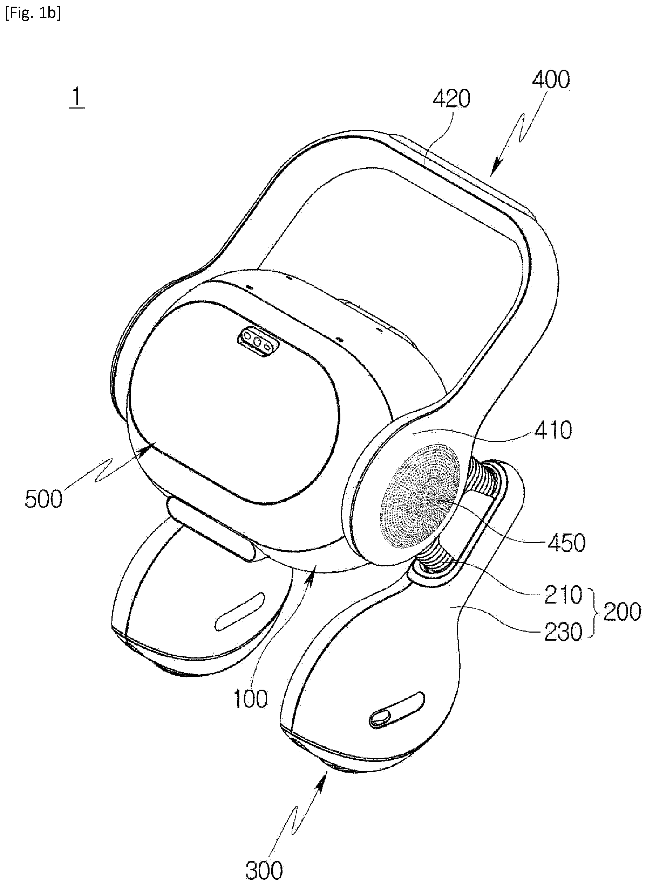

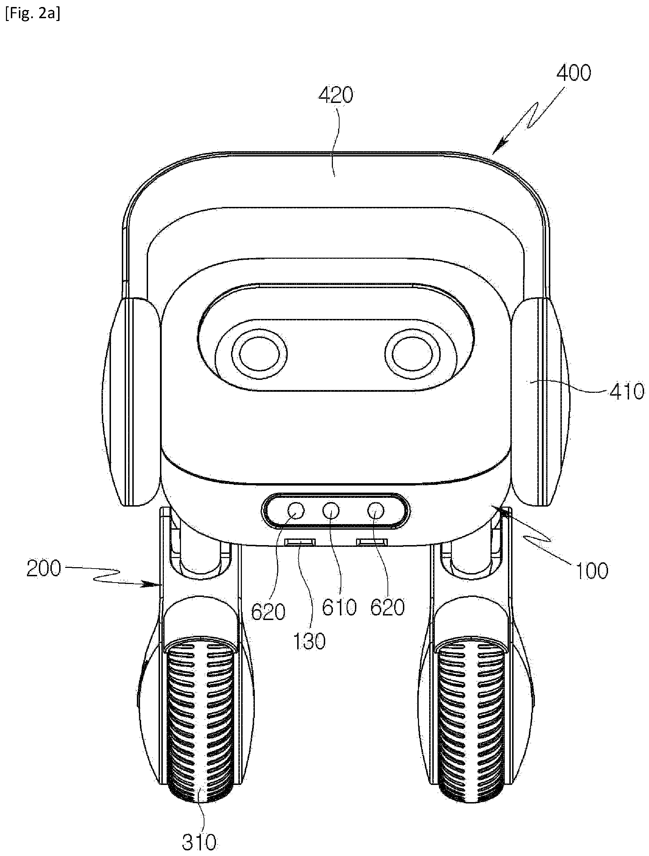

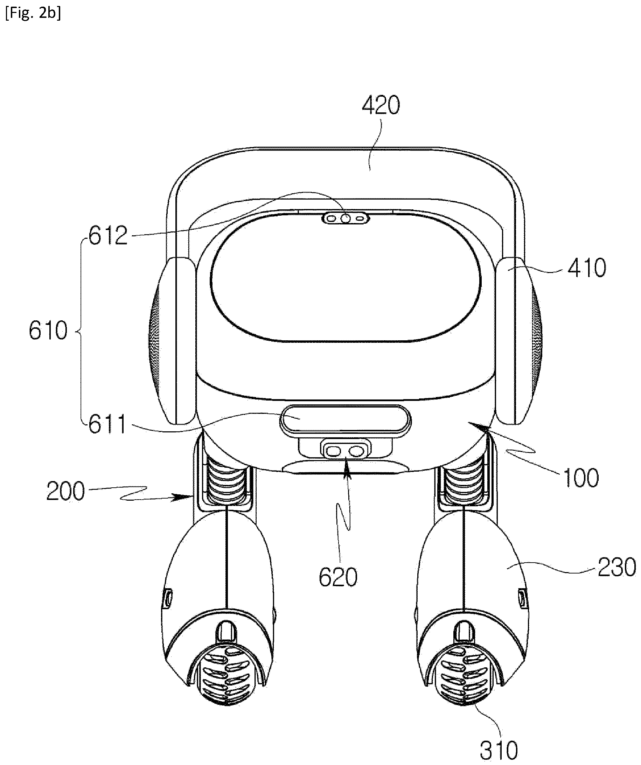

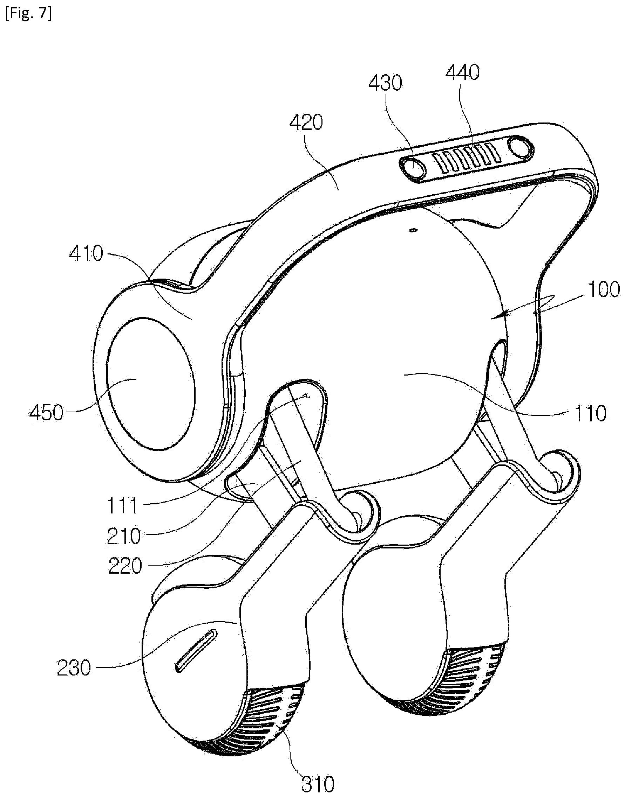

FIGS. 1a to 12 show a perspective view, a plane view, a side view, a rear view, a plane view, a bottom view of a robot according to one embodiment, and a view to describe an arm of the robot.

Referring to FIGS. 1a to 12, the robot 1 according to one embodiment of the present invention will be described as follows.

The robot 1 according to this embodiment may be configured to be placed on the floor and move along the floor surface B. accordingly, the following description will be given by determining a vertical direction based on the state where the robot 1 is placed on the floor.

The side where the obstacle detection camera 610 to be described later is placed may be defined as the front of the robot 1. In addition, the opposite side of the front may be defined as the rear side of the robot 1.

"The lowest part" of each component described in embodiments of the present invention may be the part positioned lowest in each component when the robot 1 according to the embodiments is placed on the floor and used, or may be the part closest to the floor.

The robot 1 may include a robot body 100, a leg part 200, a wheel part 300, an arm 400, and a robot mask 500. At this time, the leg part 200 may be coupled to the robot body 100, and the wheel part 300 may be coupled to the leg part 200. The arm 400 may be pivotably coupled to each lateral surface of the robot body 100. Ans, the robot mask 500 may be detachably coupled to the robot body 100.

### Robot Body:

Referring to FIGS. 1a to 12, the robot body 100 of the robot according to one embodiment of the present invention will be described as follows.

Each part of the robot 1 may be coupled to the robot body 100. For example, the robot mask 500 may be detachably coupled to the robot body 100. Also, the arm 400 may be pivotably coupled to the robot body 100. The arm 400 may be pivotably coupled to both ends of the robot body 100. The robot body 100 may be coupled to a function module 900 through the arm 400 or it may be directly coupled to the function module 900 to perform additional functions. In addition, the robot body 100 may implement a standby posture for power saving or a standing posture to get up after falling through the arm 400.

Some parts of the robot 1 may be accommodated inside the robot body 100.

A body housing 110 may define the exterior of the robot body 100. The body housing 110 may accommodate one or more motors including a suspension motor MS, one or more sensors, and a battery 800.

Although not shown, at least one bumper may be provided inside the body housing 110.

The bumper may be provided to be movable relative to the body housing 110. For example, the bumper may be movably coupled to the body housing 110 to be reciprocate along the front-back direction of the body housing 110.

The bumper may be coupled along some or all of the front surface edge of the body housing 110. In addition, the bumper may be disposed in a rear portion inside the body housing 110.

With this configuration, when the robot 1 collides with another object or person, the bumper can absorb the shock applied to the robot body 100 and protect the robot body 100 and the components provided inside the robot body 100.

A pair of leg parts 200 may be mounted inside the body housing 110. The pair of leg parts 200 may be exposed to the outside through the body housing 110.

Specifically, a first link 210 and a second link 220 may be rotatably mounted inside the body housing 110. For example, a link frame (not shown) may be provided inside the body housing 110, and the first link 210 and the second link 220 may be linked to the link frame (not shown).

The body housing 110 may accommodate a suspension motor MS. For example, the suspension motor MS may be disposed in the link frame (not shown). The suspension motor MS may be connected to the first link 210.

A pair of guide holes 111 may be formed on the body housing 110. For example, the pair of leg guide holes 111 may be formed parallel to each other along the front-back direction of the body housing 110.

With this configuration, the leg parts 200 may be rotatably moved along the leg guide holes 111 and configured to guide the rotational movement range of the leg parts 200.

The body housing 110 may be formed in a shape with the horizontal width (or diameter) greater than the vertical height. For example, the body housing 110 may have a shape similar to an ellipsoid.

The robot body 100 can help the robot 1 to have a stable structure and provide a structure that is advantageous for maintaining balance when the robot 1 moves.

The robot body 100 may be disposed vertically above the wheel 310 which will be described later. The load of the robot body 100 may be transmitted to the wheel 310 through the leg part 200, and the wheel 310 may support the leg part 200 and the robot body 100. With this configuration, the wheel 310 may stably support the load of the robot body 100.

The robot body 100 may include a display 120. The display 120 may be coupled to the body housing 110. The display 120 may be formed in a flat plate. The display 120 may be disposed at a predetermined angle with respect to the ground. For example, the display 120 may be disposed at a position facing the upper front side. With this configuration, when the robot 1 approaches the user and the user looks at the robot 1, the display 120 may be configured to be visible.

Meanwhile, the display 120 may be configured to visually transmit information related to an operational state of the robot 1 to the user.

The display 120 may be formed of a light emitting diode LED, a liquid crystal display LCD, a plasma display panel, and an organic light emitting diode OLED.

The display 120 may be configured to display information such as operating time information of the robot 1 and power information of the battery 800.

According to one embodiment, the display 120 may be an input unit 125. That is, the display 120 may receive an input of a control command from the user. For example, the display 120 may be a touch screen configured to visually display the operation state and receive an input of a control command from the user.

The display 120 may display the facial expression of the robot 1. Alternatively, the display 120 may display the eyes of the robot 1. The current state of the robot 1 may be expressed as an emotion personified through the shape of the face or the shape of the pupils displayed on the display 120. For example, when the user goes out and returns home, a smiling facial expression or smiling eye shape may be displayed on the display 120. This has the effect of making the user feel as if he or she is interacting with the robot 1.

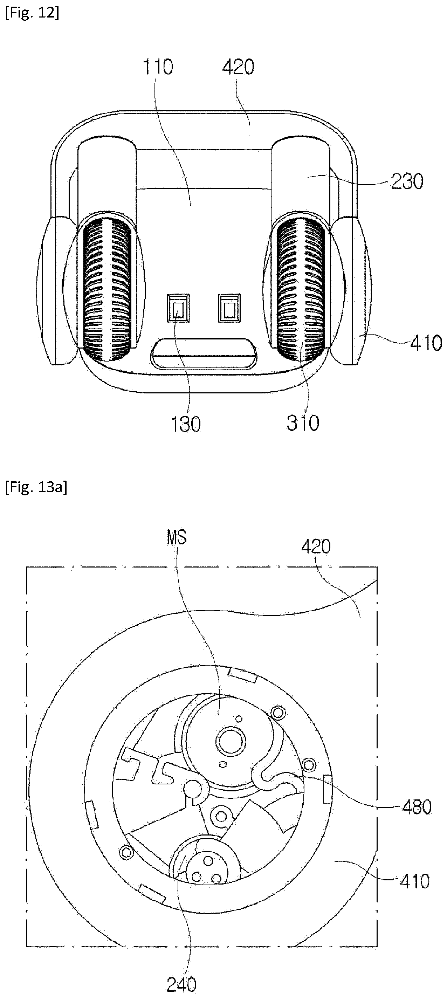

According to an embodiment, as shown in FIG. 12, a charging terminal 130 may be disposed in the body housing 110. For example, the charging terminal 130 may be disposed toward the ground. As one example, the charging terminal 130 may be disposed to face the ground. As another example, the charging terminal 130 may be disposed at a predetermined angle with the ground. With this configuration, when the robot 1 is coupled to a robot charging stand (not shown), the charging terminal 130 may come into contact with a terminal provided on the robot charging stand (not shown).

The charging terminal 130 may be electrically connected to the robot charging stand (not shown). With this configuration, the robot 1 may be supplied power through the charging terminal 130. The electric power supplied to the charging terminal 130 may be supplied to the battery 800. Also, the robot 1 may receive an electric signal through the charging terminal 130. The electric signal transmitted through the charging terminal 130 may be received by a controller 700.

According to an embodiment, a microphone 140 may be disposed in the body housing 110. Four microphones 140 may be provided on the top of the body housing 110. With this configuration, the microphone 10 may detect sounds coming from various directions and detect the location of a sound source.

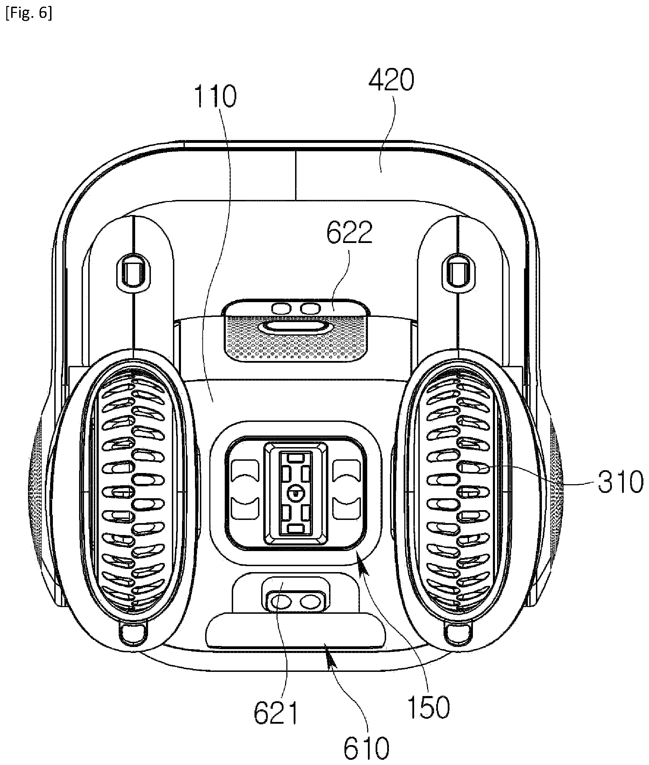

According to an embodiment, as shown in FIG. 6, a module coupling part 150 may be disposed below the body housing 110. The module coupling part 150 may be detachably coupled to the function module 900. Specifically, the module coupling part 150 may be selectively coupled to or decoupled from the function module 900.

As one example, the module coupling part 150 may be configured as an electromagnet and may selectively apply magnetic force (attractive force) to the function module 900 based on the supply of power. As another example, the module coupling part 150 may be hooked to a coupling part 930 of the function module 900. In this case, the coupling force may be strengthened between the robot body 100 and the function module 900.

At this time, a connection terminal may be provided in the coupling part 150. With this configuration, the module coupling part 150 may be coupled to the exact position of a detachable part of a metal material (or electromagnet) provided in the functional module 900, and has the effect of guiding the connection terminal to come into contact with the corresponding terminal provided in the function module 900 at the exact position.

The connection terminal may be electrically connected to the function module 900. The connection terminal may come into contact with a corresponding terminal provided in the function module 900 to be electrically connected thereto.

With this configuration, the electric power of the robot body 100 may be supplied to the function module 900 through the connection terminal. In addition, the robot body 100 may transmit and receive an electric signal to and from the function module 900.

Meanwhile, the function module 900 will be described in detail later.

In addition, a manipulation part 160 may be disposed in the body housing 110. For example, the manipulation part 160 may be disposed on the rear side of the body housing 110.

The manipulation part 160 may be manipulated by the user and the power of the robot 1 may be turned on and off by the manipulation part 160.

The manipulation part 160 may be provided on the body housing 110 to be pushed or pivoted in the left-right direction according to embodiments.

For example, the manipulation part 160 may be a button. Accordingly, while the power of the robot 1 is turned off, the user may push the manipulation part 160 and then the robot 1 may be turned on. While the power of the robot 1 is turned on, the user may push the manipulation part 160 to press and the robot 1 may be turned off.

The obstacle detection camera 610:
Meanwhile, the obstacle detection camera 610 may be provided on the front side of the body housing 110. According to an embodiment, a plurality of obstacle detection cameras 610 may be provided. For example, a first detection camera 611 may be provided on a front lower portion of the body housing 110, and a second detection camera 612 may be provided on a front upper portion of the body housing 110. At this time, the obstacle detection camera 610 may be disposed on a center line passing through the left-right center of the body housing 110. With this configuration, the obstacle detection camera 160 may detect objects or people in front of the robot 1.

In addition, an IR sensor 620 may be provided in the body housing 110. According to an embodiment, a plurality of sensors may be disposed. For example, a first IR sensor 621 may be disposed in the front lower portion of the body housing 110, a second IR sensor 622 may be disposed in a rear portion of the body housing 110. With this configuration, the IR sensor 620 may detect the location of a light source configured to generate infrared rays.

The IR sensor 620 may be disposed adjacent to the obstacle detection camera 610. As one example, the obstacle detection camera 610 may be disposed between the pair of IR sensors 620. As another example, the first IR sensor 621 may be disposed right under the obstacle detection camera 611.

With this arrangement, the light irradiated by the function module 900 or the lamp of the robot charging stand (not shown) may be detected by the IR sensor 620. When the robot body 100 approaches the lamp, the obstacle detection camera 610 may detect the shape of the function module 900 or the robot charging stand (not shown).

### Leg Part:

Referring to FIGS. 1a to 12, the leg part 200 of the robot 1 according to one embodiment will be described as follows.

The leg part 200 may be coupled to the robot body 100 and configured to support the robot body 100. For example, a pair of leg parts 200 may be provided and coupled to the inside of the body housing 110. The pair of leg parts 200 may be arranged symmetrically (linearly) to each other. At this time, at least a portion of the leg part 200 may be arranged close to the ground than the robot body 100. Accordingly, the robot body 100 may drive while standing on the ground by the pair of legs 200. That is, the gravity applied to the robot body 100 may be supported by the leg part 200 and the height of the robot body 100 may be maintained.

The leg part 200 may include an upper leg and a lower leg. At this time, the upper leg may be rotatably coupled to the robot body 100 and the lower leg. The upper leg may be disposed higher than the lower leg. That is, it can be said that the upper leg corresponds to a person's thigh and the lower leg corresponds to a person's shin.

Meanwhile, the upper leg may include a first link 210 and a second link 220. At this time, the first link 210 and the second link 220 may be rotatably coupled to the robot body 100 and a third link 230, respectively. That is, the first link 210 and the second link 220 may be linked to the robot body 100 and the third link 230, respectively.

According to an embodiment, the first link 210 and the second link 220 may be provided inside an upper link cover not to be exposed outside. The upper link cover may be formed of a kind of corrugated pipe shape and may accommodate the first link 210 and the second link 220. The length of the upper link cover may be extended and contacted based on the rotation of the upper leg.

The first link 210 may be linked to a left-right portion inside the robot body 100.

The first link 210 may be connected to the suspension motor MS. For example, the first link 210 may be connected to a shaft of the suspension motor MS directly or through a gear. With this configuration, the first link 210 may receive driving force from the suspension motor MS.

The first link 210 may be formed in a frame shape, and the suspension motor MS may be connected to a longitudinal side of the first link and the third link 230 may be coupled to the other longitudinal side. At this time, one side of the first link connected to the suspension motor MS may be arranged farther from the ground than the other side coupled to the third link 230.

One side of the first link 210 may be coupled to a leg support portion (not shown) provided inside the body housing 110. The first link 210 may be rotatably coupled to the leg support portion. For example, one side of the first link 210 may be formed in a shape of a disk or circular plate. Accordingly, one side of the first link 210 may penetrate the leg support portion and be connected to the suspension motor MS.

One side of the first link 210 may be connected to the suspension motor MS. For example, one side of the first link 210 may be fixedly coupled to the shaft of the suspension motor MS. With this configuration, when the suspension motor MS drives, one side of the first link 210 may be rotatable in relation with the rotation of the shaft of the suspension motor MS.

The other side of the first link 210 may be rotatably coupled to the third link 230. For example, a through-hole may be formed on the other side of the first link 210. The shaft may be rotatably coupled to the through-hole while passing through it. Both longitudinal ends of the shaft may be coupled to the third link 230.

With this configuration, the shaft may be an axis around which the first link 21 and/or the third link 230 rotate. Accordingly, the first link 210 and the third link 230 may be connected so as to perform relative rotation.

Although not shown, the leg part may further include a gravity compensation part. The gravity compensation part may compensate for the robot body 100 from descending vertically due to gravity. That is to say, the gravity compensation part may provide force to support the robot body 100.

For example, the gravity compensation part may be a torsion spring. The gravity compensation part may be wound to wrap around the outer circumferential surface of the first link 210. One end of the gravity compensation part may be inserted into the first link 210 to be fixedly coupled, and the other end thereof may be inserted into the third link 230 to be fixedly coupled.

The gravity compensation part may apply force in a direction in which the angle between the first link 210 and the third link 230 becomes greater. For example, the gravity compensation part may have both ends that are bent in advance so as to apply a restoring force in the direction in which the angle between the first link 210 and the third link 230 increases. Accordingly, even if gravity is applied to the robot body 100 while the robot 1 is placed on the ground, the angel between the first link 210 and the third link 230 may be maintained within a predetermined angle range.

With this configuration, even if the suspension motor MS is not driving, the robot body 100 may be prevented from falling down to the ground. Accordingly, there is an effect of maintaining the height of the robot body 100 above a predetermined distance from the ground while preventing energy loss due to the suspension motor MS driving by the gravity compensation part.

The second link 220 may be linked to the left-right side inside the robot body 100. For example, the second link 220 may be linked to a leg support portion (not shown) provided inside the body housing 110. That is, the second link 220 may be coupled to the leg support portion (not shown) to which the first link 210 is coupled.

The second link 220 may be formed in a frame shape, and the longitudinal side of the second link 220 may be coupled to the leg support portion (not shown) and the other longitudinal side thereof may be coupled to the third link 230.

The second link 220 may accommodate wires. For example, a space may be formed inside the second link 220 to accommodate wires. Accordingly, the power of the battery 800 may be supplied to the wheel part 300 through wires. Together with that, it is possible to prevent the wires from being exposed to the outside.

One side of the second link 220 may be rotatably coupled to the leg support portion. For example, although not shown, a shaft to be coupled to the leg support portion may pass through one side of the second link 220. A hollow may be formed in the shaft, and a wire may pass through the hollow. With this configuration, it is possible to prevent the wires supplying power from the battery 800 to the wheel motor MW from being exposed to the outside.

The other side of the second link 220 may be rotatably coupled to the third link 230. Specifically, the other side end of the second link 220 may be rotatably coupled to the third link 230 through the shaft. For example, the other side of the second link 220 may be formed in a disk shape, and the shaft may pass through the other side. Both longitudinal ends of the shaft may be coupled to the third link 230. With this configuration, the shaft may be an axis around which the second link 220 and/or the third link 230 rotate. Accordingly, the second link 220 and the third link 230 may be connected so as to be relatively rotatable.

The third link 230 may be linkedly coupled to the first link 210 and the second link 220, and may be coupled to the wheel part 300.

The third link 230 may be formed in a frame shape with one longitudinal side coupled to the link 210 and the second link 220 and the other longitudinal side coupled to the wheel part 300.

One longitudinal side of the third link 230 may be linked to the first link 210 and the second link 220. For example, a space may be formed in one side of the third link 230 to accommodate the first link 210 and the second link 220. That is, one side of the third link 230 may be formed as a pair of frames arranged parallel to each other, and the first link 210 and the second link 220 may be disposed in the space between the pair of frames.

Here, two shafts may be arranged parallel between the pair of frames. That is, both ends of each shaft may be coupled to the pair of frames. Each shaft may pass through the first link 210 and the second link 220. At this time, the first link 210 may be disposed more forward and lower than the second link 220. Specifically, the shape passing through the first link 210 may be disposed closer to the wheel part 300 than the shaft passing through the second link 220.

Accordingly, the first link 210 and the second link 220 may be coupled to the third link 230 so as to be relatively rotatable with respect to it.

The other longitudinal side of the third link 230 may be coupled to the wheel part 300. The other longitudinal side of the third link 230 may be formed to cover at least a portion of the wheel 310. For example, the other longitudinal side of the third link 230 may be formed to cover the rotational center of the wheel 310, and may have a space formed to rotatably accommodate the wheel 310.

In addition, a wheel motor MW may be mounted inside the other longitudinal side of the third link 230.

With this configuration, the other longitudinal side of the third link 230 may accommodate the wheel 310 and the wheel motor MW, and it may have the wheel 310 rotatably coupled thereto.

Meanwhile, a sensor configured to measure a distance to the ground may be provided in the other longitudinal side of the third link 230. As one example, the sensor may be a ToF sensor (Time of Flight sensor). With this configuration, the controller 700 may be configured to determine whether the wheel 310 comes into contact with the ground. As another example, a third cliff sensor 671 may be disposed on the front lower portion of the third link 230 and a second cliff sensor 672 may be disposed on the rear upper portion of the third link 230. With this configuration, the distance between the third link 230 and the wheel 310 and the ground B may be measured. In addition, it is also possible to calculate the angle between the third link 230 and the ground through the distance difference between the third cliff sensor 671 and the second cliff sensor 672.

Meanwhile, the leg part 200 may include a stopper 240. The stopper 240 may be disposed inside the body housing 110. The stopper 240 may be disposed adjacent to the rotation coupling portion 410 of the arm 400. For example, the stopper 240 may be provided on an inner circumferential surface of the rotation coupling portion 410 formed in a cylinder shape.

As one example, the stopper 240 may be disposed in the leg support portion (not shown). As another example, the stopper 240 may be disposed in the first link 210.

The stopper 240 may be formed in a shape protruding toward the rotation coupling portion 410. For example, the stopper 240 may protrude in an arch shape arranged in a concentric circuit, with a predetermined thickness. At this time, the outer circumferential surface of the stopper 240 may be disposed toward the front upper portion of the robot 1 and the inner circumferential surface thereof may be disposed toward the rear lower portion of the stopper.

The stopper 240 may be supported by contact with a rotation protrusion 480 of the arm 400, which will be described later. For example, the rotation protrusion protruding from the inner circumferential surface of the rotation coupling portion 410 may be rotated together with the rotation of the arm 400. When the arm 400 is rotated to a predetermined position, the arm may come into contact with the rotation protrusion 480.

With this configuration, the stopper 240 may be configured to restrict the rotation angle of the arm 400 when the arm 400 rotates.

Looking at the balance by the leg part 200 as a whole, the first link 210 and the second link 220 are rotatably connected to the link frame (not shown) provided inside the robot body 100, and the first link 210 and the second link 220 may be linked to the third link 230. That is, the robot 1 may have a structure configured to support the robot body 100 through a four-section link consisting of the link frame (not shown), the first link 210, the second link 220, and the third link 230.

The leg part 200 may generate a restoring force in the direction in which the gravity compensation part lifts the robot body 100. Accordingly, even while the suspension motor MS is not driven, it is possible to maintain the state where the pair of leg parts 200 lifted the robot body 100 to a predetermined height from the ground.

Meanwhile, the robot 1 according to one embodiment may keep balance by driving the suspension motor MS when lifting one of the pair of wheels 310 to overcome an obstacle or lowering the height of the robot body 100 for charging, etc.

When the suspension motor MS is driven, the first link 210 may be rotated around the motor coupling portion 212 and the link coupling portion 213 may be moved upward. The third link 230 may be moved along with the rotation of the first link 210. The second link 220 may be pushed and rotatably moved by the third link 230. As a result, one end of the third link 230 may be moved rearward and the other end of the third link 230 may be moved upward.

With this configuration, even if the wheel 310 is moved upward and rearward, the forward and rearward movement range may be restricted. Accordingly, the robot 1 may keep balance stably.

As a result, the robot 1 according to the present invention may have an effect of overcoming obstacles with various heights by using the four-section link structure.

### Wheel Part:

Referring to FIGS. 1a to 12, the wheel part 300 of the robot 1 according to one embodiment will be described as follows.

The wheel part 300 may be rotatably coupled to the leg part 200, and configured to roll on the ground so as to move the robot body 100 and the leg part 200.

The wheel part 300 may include wheels 310 configured to roll-moves over the ground by coming into contact with the ground.

The wheel 310 may have a predetermined radius and a predetermined width along the axial direction. When looking at the robot 1 from the front, at least a portion of the robot body 100 and the leg part 200 may be arranged vertically above the wheel 310.

Although not shown, the wheel 310 may include a wheel frame formed in a circular shape. The wheel frame may have one side directed to the shaft and the side may be opened. Through this, the weight of the wheel frame 311 may be reduced.

However, when the wheel frame is formed in cylinder shape, the overall rigidity of the wheel frame might be reduced. Considering this, ribs (not shown) for reinforcing rigidity may be formed on the inner and outer circumferential surfaces of the wheel frame, respectively.

A tire may be coupled to the outer circumferential surface of the wheel frame. The tire may be formed in annulus shape having a diameter large enough to fit onto the outer circumferential surface of the wheel frame.

A predetermined pattern of grooves may be formed on the outer circumferential surface of the tire to improve the tire traction.

In one embodiment, the tire may be made of a rubber with elasticity.

The wheel motor MW may be configured to provide a driving force to the wheel 310. The wheel motor MW may generate a rotation force by receiving electric power from the battery 800.

The wheel motor MW may be provided in the other side of the third link 230. The shaft of the wheel motor MW may be coupled to the wheel 310. That is, the wheel motor MW may be an in-wheel motor.

With this configuration, when the wheel motor MW is driven, the wheel 310 may rotates and roll along the ground to move the robot 1 along the ground.

### Arm:

Referring to FIGS. 1a to 12, the arm 400 of the robot 1 according to one embodiment of the present invention will be described as follows.

The arm 400 may be pivotably coupled to both lateral surfaces of the robot body 100. For example, the arm 400 may mean a rotating body connected to both axial (longitudinal) ends of the robot body 100 formed in an oval shape and rotating around both ends in the axial ends of the robot body 100.

Specifically, the arm 400 may include a rotation coupling portion 410 and a connecting portion 420.

The rotation coupling portion 410 may be rotatably coupled to both lateral surfaces of the robot body 100. A pair of rotation coupling portions 410 may be provided and rotatably coupled to left-right direction sides of the robot body 100 so as to be relatively rotatable. At this time, the pair of rotation coupling portions 410 may be rotatable may rotate in conjunction with each other. That is, the pair of rotation coupling portion 410 may rotate simultaneously with each other, and the angular size of the rotation may be the same. However, when viewed from the robot body 100, the rotation directions of the pair of rotation coupling portion 410 may be opposite to each other. Specifically, when viewed from the robot body 100, if the rotation coupling portion 410 on one side rotates clockwise, the rotation coupling portion 410 on the other side may rotate counterclockwise.

The rotation coupling portion 410 may be formed in a shape capable of covering both left and right ends of the robot body 100. For example, the rotation coupling portion 410 may be formed in a cylinder shape with a predetermined thickness. At this time, both left and right ends of the robot body 100 may be disposed to the rotation center of the rotation coupling portion 410.

Specifically, when describing the state where the rotation coupling portion 410 is coupled to the robot body 100, assuming that the robot body 100 is a human face, the rotation coupling portion 410 may have a shape similar to a pair of earplugs or an earpiece of the headphones.

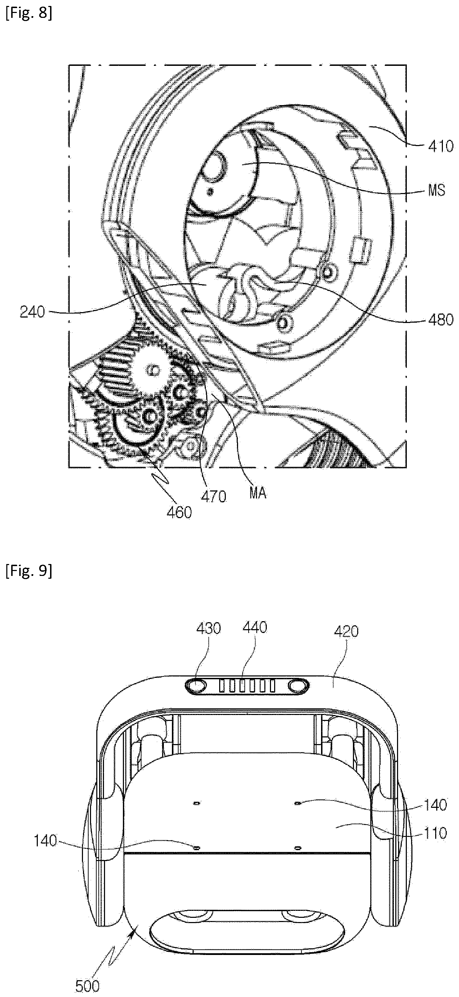

As shown in FIG. 8, in the robot 1 according to one embodiment, a female motor MA may be mounted inside the body housing 110. Alternatively, the female motor MA may be mounted inside the rotation coupling portion according to embodiments.

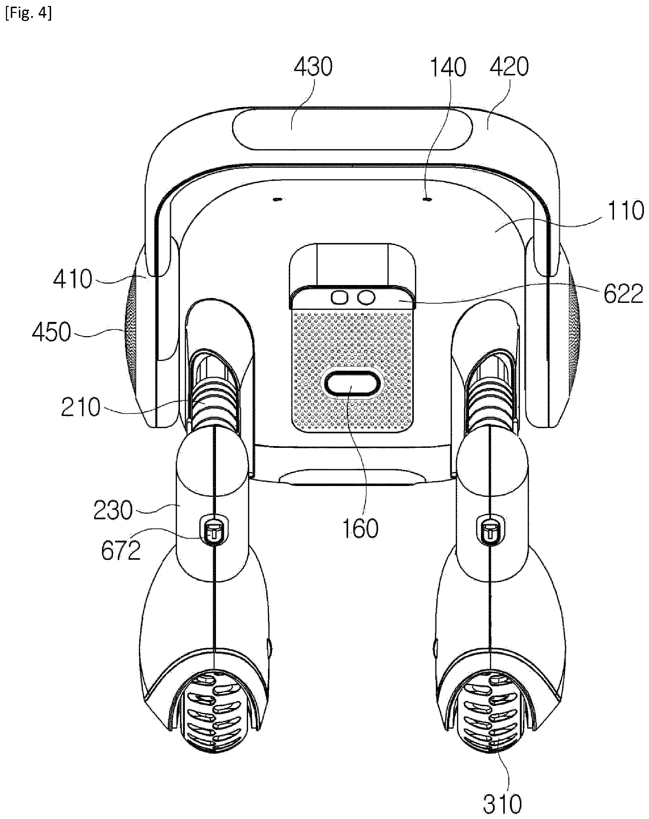

The female motor MA may be connected to the arm 400 and configured to provide a driving force to the arm 400. Specifically, a final output end of the shaft or gear of the female motor MA may be connected to the rotation coupling portion 410. For example, as shown in FIG. 4, the shaft of the female motor MA may be connected to a reducer 460 and the reducer 460 may be connected to a driven gear 470.

The reducer 460 may be configured of at least one gear. The rotation force applied by the female motor MA may be transmitted to the driven gear 470. The rotational speed of the driven gear 470 may be reduced through the gear ratio. Accordingly, the precise rotation of the arm 400 may be controlled and the arm 400 may provide relatively large force.

The driven gear 470 may be coupled to the rotation coupling portion 410 to integrally rotate. The driven gear 470 may engage with the output end of the reducer 460 to receive the rotation power of the female motor MA.

With this configuration, when the female motor MA is driven, the rotation coupling portion 410 may be rotated.

Two female motors MA may be provided and connected to the pair of rotation coupling portions 410, respectively. As another example, one female motor MA may be provided and connected to one of the pair of rotation coupling portion 410.

With this configuration, when the female motor MA is driven, the pair of rotation coupling portions 410 may be rotated together in conjunction. The connecting portion 420 may be rotated together with the rotation of the rotation coupling portion 410. That is, according to the present invention, in the arm 400, the rotation coupling portion 410 and the connecting portion 420 may be integrally rotated by using the arm shaft of the rotation coupling portion 410 as the rotation axis.

Meanwhile, a speaker 450 may be disposed outside the rotation coupling portion 410. That is, the speaker 450 may be disposed in each of opposite directions of the direction in which the robot body 100 is provided in the pair of rotation coupling portions 410. Accordingly, the speaker 450 may be provided at a position covering each of the left and right sides of the body housing 110.

The speaker 450 may be configured to transmit information of the robot 1 as sound. The source of sound transmitted by the speaker 450 may be sound data prestored in the robot 1. For example, the prestored sound data may be voice data of the robot 1. The preset sound data may be an alarm sound configured to guide the state of the robot 1. Meanwhile, the source of the sound transmitted by the speaker 450 may be sound data received through a communication part 710.

Meanwhile, in the conventional robot, a pair of arms may be provided on the sides of the body, similar to human arms, to move objects or perform specific tasks.

However, when the pair of arms are provided, each arm can move independently and accordingly, the load applied to each side of the robot may be different. Accordingly, the problem of the robot leaning to one side and falling over might occur.

In addition, when it falls over, the robot can attempt to stand up by having the arms touch the ground, but since the arms on both sides rotate separately to touch the ground, there is a limitation that the robot might lose its balance during the standing process and fall down again.

Meanwhile, in the case of a robot that transports objects or performs a specific task through a single arm, there is a limitation that the load of the object being transported or the shock that might occur during the task is concentrated on the single arm, which might cause damage to the arm.

To solve the limitations, in the robot 1 according to the embodiment of the present invention, one arm 400 may be configured to be rotatably coupled to both sides of the robot body 100.

The connecting portion 420 may be configured to connect the pair of rotation coupling portions 410. The connecting portion 420 may connect the pair of rotation coupling portions 410 covering the left and right sides of the robot body 100, to rotate together.

The connecting portion 420 may connect the pair of rotation coupling portions 410 to each other, and may be provided to be rotatable with respect to the robot body 100. Specifically, the connecting portion 420 may be formed in a frame shape in which both longitudinal ends are folded and extended. At this time, the folded and extended ends of the connecting portion 420 may be provided parallel to each other to be connected to the pair of rotation coupling portions 410. As one example, the connecting portion 420 may be formed in a '∩' shape. As another example, the connecting portion 420 may also be formed in an arch shape.

When describing the state in which the arm 400 is coupled to the robot body 100, assuming that the robot body 100 is a human face, the connecting part 420 may have a shape similar to a headphone air hand. That is, assuming that the robot body 100 is a human face, the arm 400 may appear in a shape similar to headphones.

With this configuration, the pair of rotation coupling portions 410 may be integrally connected to the connecting portion 420, so that the entire arm 400 may be rotated together with respect to the rotation coupling portion 410.

Meanwhile, the radius of rotation of the arm 400 may be longer than the maximum length of the first link 210 and shorter than the maximum length of the leg part 200. Specifically, the shortest distance from the rotation center of the rotation coupling portion 410 to the outer end of the connecting portion 420 may be longer than the maximum length of the first link 210 and shorter than the maximum length of the leg part 200.

With this configuration, when the arm 400 is rotated, at least a portion of the arm 400 may be disposed closer to the ground than the first link 210.

Meanwhile, the arm 400 may further include a rotation protrusion 480 protruding from the inner circumferential surface of the rotation coupling portion 410.

The rotation protrusion 480 may protrude from the inner circumferential surface of the rotation coupling portion 410, and may be formed with the circumferential width that becomes narrower than the inner circumferential surface of the rotation coupling portion 410 toward the rotation center of the rotation coupling portion 410 (see FIG. 13a).

The rotation protrusion 480 may be rotated together with the rotation coupling portion 410 and the connecting portion 420. That is, when the rotation coupling portion 410 and the connecting portion 420 are rotated, the rotation protrusion 480 may be rotated by the same rotation angle as the rotation coupling portion 410 and the connecting portion 420.

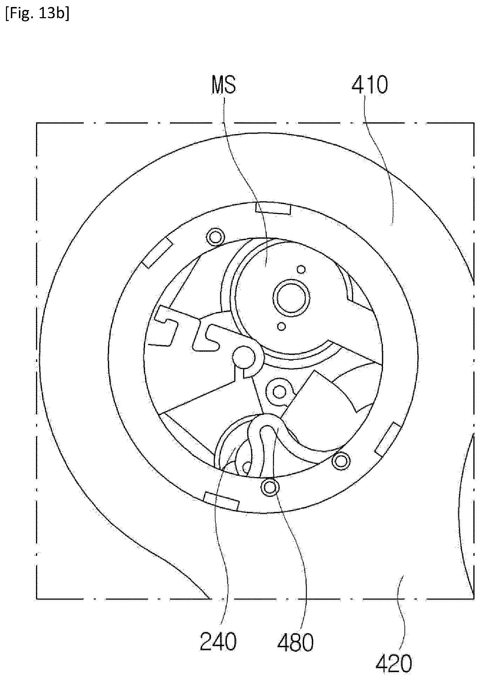

The rotation protrusion 480 may be supported by coming into contact with the stopper 240 based on the rotation of the arm 400. For example, when the connecting portion 420 is rotated to become closer to the ground than the first link 210 past the rear of the robot body 100, the rotation protrusion 480 may come into contact with the stopper 240 (see FIG. 13b).

With this configuration, when the arm 400 is rotated to a predetermined position, the stopper 240 and the rotation protrusion 480 may be supported by contact, thereby restricting the rotation of the arm 400.

In addition, there is an effect of maintaining the posture of the arm and the leg part 220 while the stopper 240 and the rotation protrusion 480 maintain the mutually supporting state.

If no special command from the user or the preset situation occurs, the outer end of the arm 400 may be disposed farther from the ground than the robot body 100. With this configuration, the user can easily carry the robot 1 by holding the arm 400. That is, the arm 400 can perform the function of a handle that can be gripped by the user.

If no special command from the user or preset situation occurs, the arm 400 may be disposed farther back than the robot mask 500.

Meanwhile, when the user's special command or preset situation occurs, the arm 400 may implement various functions while rotating. Hereinafter, the various functions implemented as the arm 400 rotates will be described.

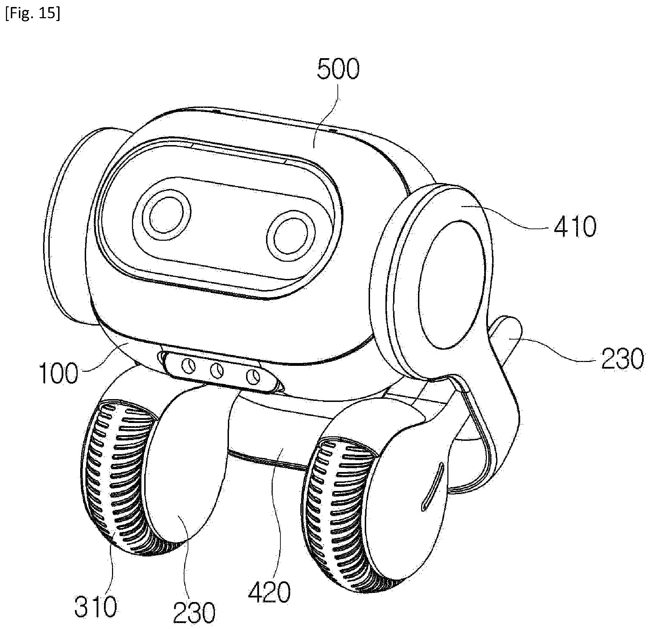

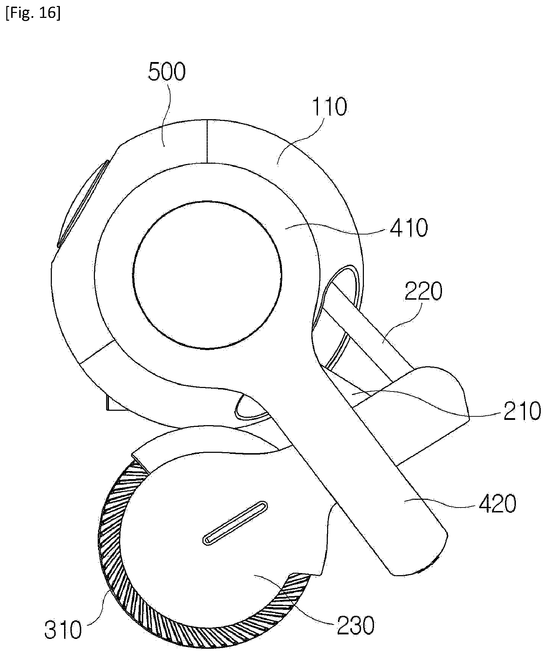

Meanwhile, FIGS. 13a to 16 show views to describe the state where the robot according to embodiments are in standby without moving.

As shown in FIGS. 13a to 16, the robot 1 according to the present invention may rotate the arm 400 toward the ground. For example, the arm 400 may be rotated from the upper portion of the robot body 100, past the rear portion, to the rear lower portion of the robot body 100. That is, the arm 400 may be rotated rearward by the operation of the arm motor MA.

The arm 400 may be rotated closer to the ground than the lower end of the first link 210 and the lower end of the second link 220. At least a portion of the arm 400 may be arranged closer to the ground than the upper end of the third link 230.

Along with that or prior to the rotation of the arm 400, the leg part 200 may be moved to lower the posture of the robot 1. Specifically, the angle between the first link 210 and the third link 230 and the angle between the second link 22 and the third link 230 may become narrow.

Accordingly, when viewed as a whole, the robot body 100 may descend toward the ground, and the outer end of the arm 400 may be positioned closer to the ground than the joint portions where the first link 210, the second link 220 and the third link 230 are coupled to each other. This looks similar to the robot 1 scooching down.

At this time, the rotation protrusion 480 of the arm 400 may be in contact with the stopper 240 to support each other, and the additional rotation of the arm 400 may be restricted.

Through this operation, the center of the overall weight of the robot 1 may be lowered. In addition, with the rearward rotation of the arm 400, the center of that overall weight may be moved rearward.

Accordingly, even if the wheel 310 is not rotated by stopping the operation of the wheel motor MW, the robot 1 may tilt rearward and the pair of wheels 310 and the lower end of the arm 400 may come into contact with the ground.

At this time, the load of the robot body 100 may press the leg part 200 and at the same time, the rotation protrusion 480 and the stopper 240 may support each other, thereby preventing the leg part 200 from unfolding. Specifically, when the pair of wheels 310 and the lower end of the arm 400 come into contact with the ground, the robot 1 can keep the posture without additional motor driving.

As a result, through the above-described motion of the robot 1, one arm 400 and the pair of wheels 310 may come into contact with the ground and the robot body 100 can be supported at three points.

According to the present invention, when the robot 1 does not need to move or wait in place, the robot can maintain its posture by touching the ground with the arm 400 and the wheels 310 without driving the wheel motor MW, thereby causing an effect of minimizing the power consumption of the robot 1.

This has an effect of significantly reducing power consumption, compared to the conventional two-wheeled robots that must continuously rotate the pair of wheels to stand still.

Or, even if the robot is lying down or sitting on the ground to reduce power waste, there is a limitation that a large amount energy must be applied to the wheels and/or arms momentarily to implement the motion of raising up the robot again.

In comparison, according to the present invention, since the robot 1 maintains the state of touching the ground through the arm 400, the robot 1 can stand up again with just the simple movement of the arm 400 pushing the ground, thereby causing an effect of minimizing power waste.

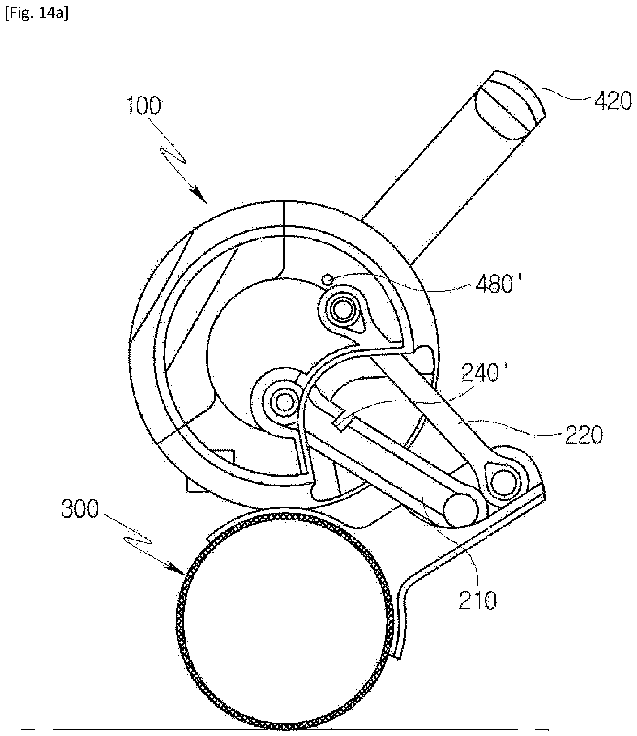

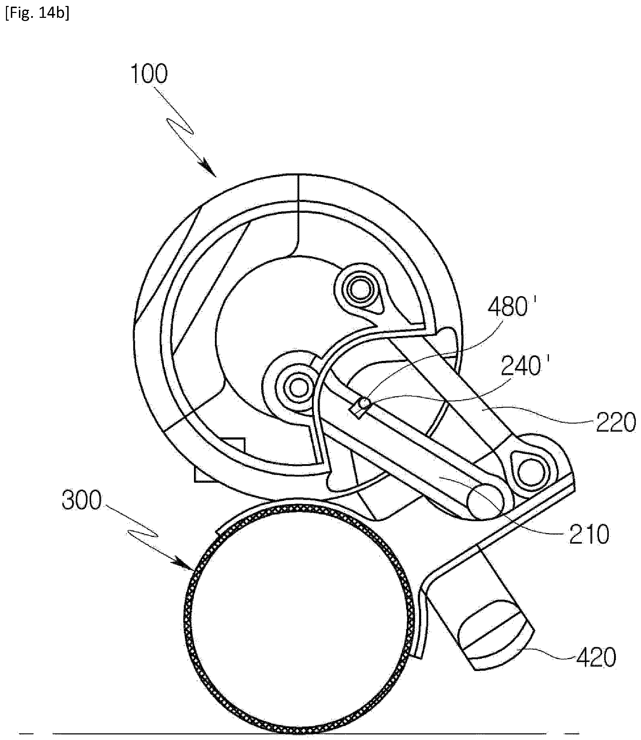

Meanwhile, FIGS. 14a and 14b are views to describe another example of FIGS. 13a and 13b.

To avoid repeated description, except for the contents specifically described in this embodiment, the configuration and effects are the same as those of the robot 1 according to the above embodiment, and thus can be used.

The rotation protrusion 480' of this embodiment may be protruded from the rotation coupling portion 410, to be rotatable together with the rotation coupling portion 410. At this time, the rotation protrusion 480' may protrude toward the inside of the robot body 100 from the rotation coupling portion 410.

In this embodiment, the stopper 240' may be formed in the first link 210 in a groove shape. Accordingly, the stopper 240' may be rotated together with the rotation of the first link 210.

At this time, the path along which the stopper 240' rotates and the path along which the rotation protrusion 480' rotates may intersect at at least one point, and at this intersection, the rotation protrusion 480' may be received by the stopper 240' and supported by each other.

Specifically, when the robot starts the standby without moving, the leg part 200 may lower the posture of the robot 1 and rotate the first link 210, and the stopper 240' may rotate to the intersection point. Together with that, as the rotation coupling portion 410 and the connecting potion 420 are rotated, the rotation protrusion 480' may be rotated as well so that the stopper 240' can accommodate the rotation protrusion 480'.

Accordingly, the rotation protrusion 480' and the stopper 240' may be fitted to each other to be supported, and the robot 1 can maintain its posture without additional driving of the motor.

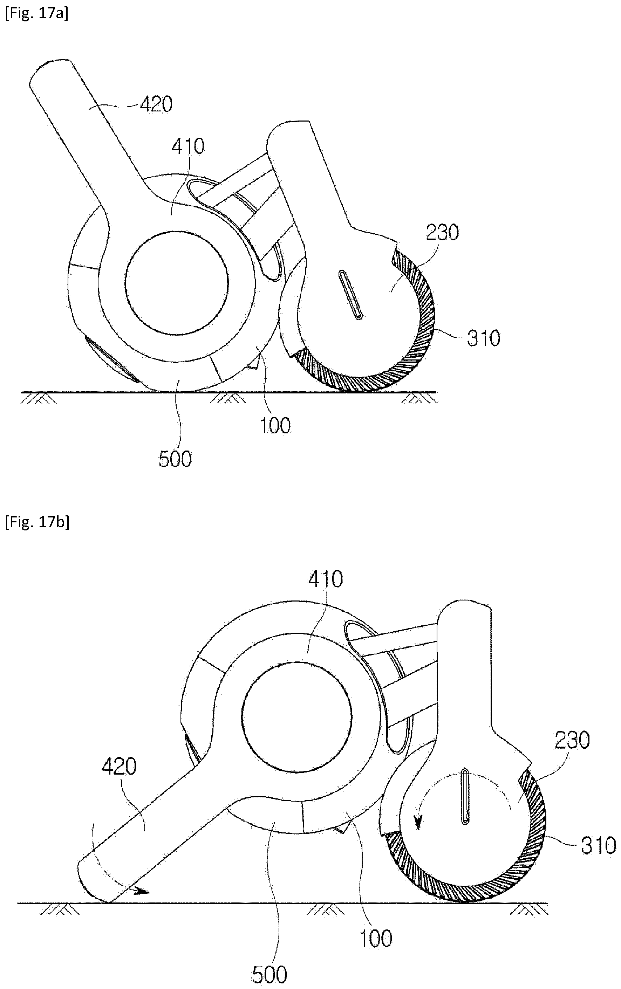

FIGS. 17a and 17b are views to describe the motion that occurs when the robot according to one embodiment of the present invention falls forward.

As shown in FIGS. 17a and 17b, in the state where the robot has fallen forward, the robot 1 may rotate the arm 400 toward the ground. For example, the arm 400 can be rotated from the upper portion of the robot body 100, past the front portion, to the front lower portion of the robot body 100. That is, the arm 400 may be rotated forward by the operation of the arm motor MA.

In this process, the arm 400 may come into contact with the ground. When the robot 1 falls forward, at least one of the front surfaces of the robot body 100 and the pair of wheels 310 may come into contact with the ground. Here, when the arm 400 is rotated to the front side of the robot body 100, the outer end of the arm 400 may come into contact with the ground.

Together with the rotation of the arm 400, the wheel 310 may be rotated in the direction in which the robot 1 moves forward. That is, the pair of wheels 310 may be rotated in the direction in which makes the distance from the arm 400 closer.

With this configuration, as the arm 400 touches the ground and lifts the robot body 100 away from the ground, the wheels 310 may dig into the lower portion of the robot body 100 while moving forward. Accordingly, the robot body 100 may be lifted to its original position.

As a result, in the robot 1 of the present invention can stand up by one arm touching the ground, so the robot 1 can be prevented from shaking or falling down again during the process of standing up, and power consumed during the standing up process may be minimized.

When the conventional two-wheeled robot falls over, the robot must momentarily rotate the pair of wheels strongly and the continue to move forward and rearward again to regain balance.

To solve this disadvantage, there is method of using the arms on the left and right sides of the robot according to the present invention. However, since the positions where the pair of arms come into contact with the ground are different, the points of force that the robot uses to stand up are different, and as a result, the robot may shake as it stands up. In this case, there is a limitation to the robot falling down again.

In contrast, according to the present invention, the single arm 400 connected to the left and right sides of the robot body 100 may have a constant point of contact with the ground. In addition, at least a portion of the outer end of the arm 400 may be formed parallel to the ground along the left-right direction. Accordingly, a relatively large area may come into contact with the ground.

Therefore, in the process of the lifting the robot body 100, the robot body 100 may not shake and rise stably, thereby keeping balance.

In addition, since the robot 1 can be raised up by only applying a constant rotational force to the arm 400 and the pair of wheels 310 without the need to apply a strong rotational force to the wheels momentarily, it is possible to prevent damage to the motor and reduce the overall power consumption.

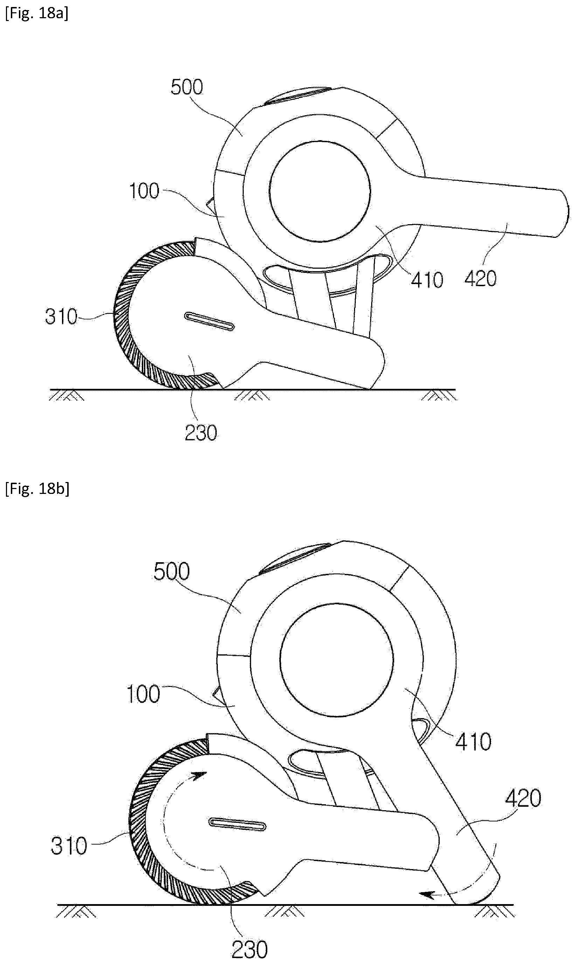

Meanwhile, FIGS. 18a and 18b are views to describe the motion that occurs the robot according to one embodiment of the present invention falls backward.

As shown in FIGS. 18a and 18b, the robot 1 may rotate the arm 400 toward the ground while it has fallen rearward. For example, the arm 400 may be rotated from the upper portion of the robot body 100 to the rear lower portion of the robot body 100 past the rear portion. That is, the arm 400 may be rotated rearward by the operation of the arm motor MA.

In the process, the arm 400 may come into contact with the ground. When the robot 1 falls rearward, some portion of the third link may come into contact with the ground. Here, when the arm 400 is rotated toward the rear portion of the robot body 100, the outer end of the arm 400 may come into contact with the ground.

Together with the rotation of the arm 400, the wheels 310 may be rotated in the direction in which the robot 1 moves rearward. That is, the pair of wheels 310 may be rotated in the direction in which the distance to the arm 400 becomes narrow.

With this operation, while the arm 400 may touch the ground and the wheels 310 may move backward, the robot 100 and the third link 230 may be limited. Accordingly, the robot body 100 may be limited to its original position.

As a result, the robot 1 of the present invention can stand up by one arm touching the ground, thereby preventing the robot 1 from shaking or falling down again while standing up and minimizing the power consumed during the standing up process.

According to the present invention, one arm 400 coupled to the left and right sides of the robot body 100 may have a constant position of contact with the ground. In addition, at least a portion of the outer end of the arm 400 is formed parallel to the ground along the left-right direction, so a relatively large area can come into contact with the ground.

As a result, in the process of lifting the robot body 100, the robot body 100 may be lifted stably without the shaking, thereby maintaining balance.

In addition, since the robot 1 can be raised up by only applying a constant rotational force to the arm 400 and the pair of wheels 310 without the need to apply a strong rotational force to the wheels momentarily, it is possible to prevent damage to the motor and reduce the overall power consumption.

In the present invention, even if the robot 1 falls forward or backward, the rotational direction of the arm 400 and the wheels 310 may be changed so that the robot 1 can stand up.

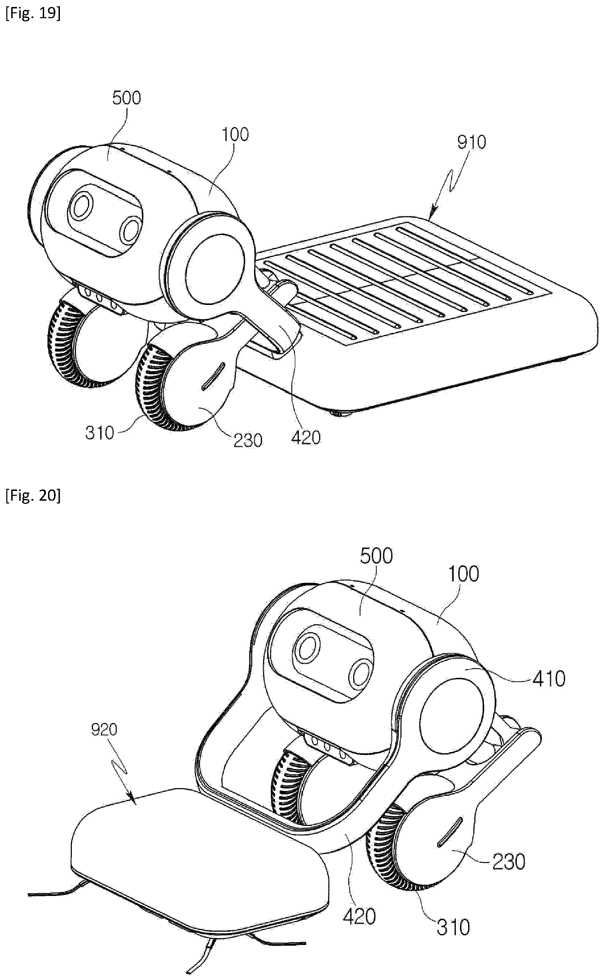

FIGS. 19 and 20 are views to describe a state in which a robot according to one embodiment of the present invention is coupled to a function module.

As shown in FIGS. 19 and 20, the arm of the robot 1 according to embodiments may be detachably coupled to a function module 900. Specifically, the detachable structure provided in the arm 400 may come close to the detachable structure provided in each functional module 900 by the rotation of the arm 400, so that the detachable structures can be coupled to each other.

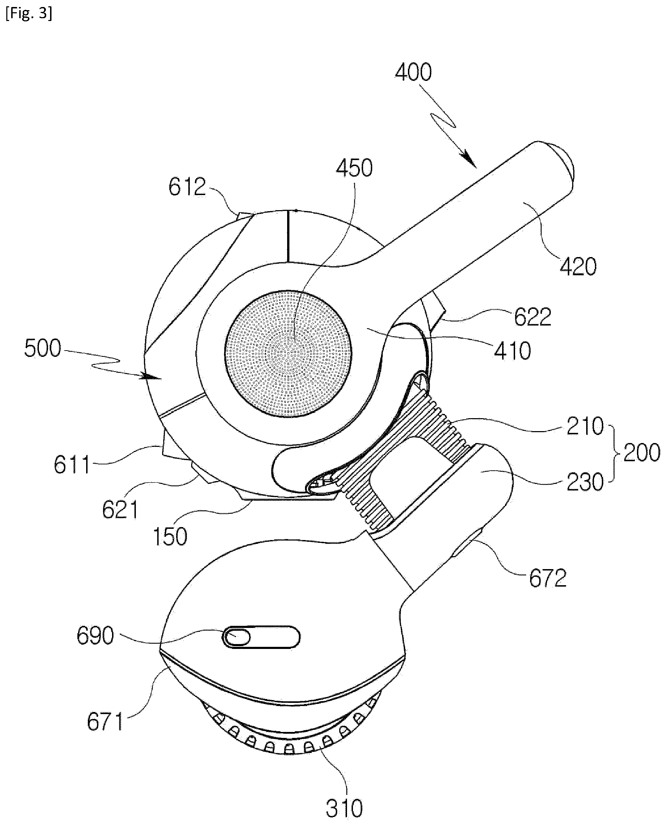

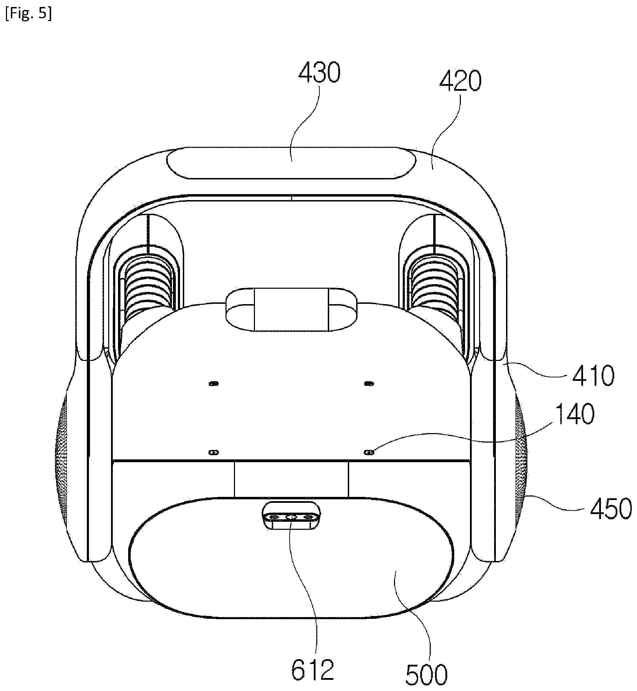

To this end, as shown in FIGS. 3 and 5, the arm 400 of the robot 1 according to one embodiment of the present invention may further include a detachable portion 430 and a connection terminal 440 to be coupled to the function module 900.

The detachable portion 430 may be provided in the connecting portion 420. Specifically, the detachable portion 430 may be arranged on the outer surface of the connecting portion 420. Here, the outer surface of the connecting portion 420 may mean a surface disposed in the opposite direction from the direction in which the connecting portion 420 faces the robot body 100.

With this configuration, the detachable portion 430 may be exposed to an outer area with respect to the robot body 100 to facilitate contact with an object approaching from the outside of the robot 1.

The detachable portion 430 may be detachably coupled to the function module 900. Specifically, the detachable portion 430 may be selectively coupled or decoupled to or from the function module 900.

The detachable portion 430 is formed as an electromagnet, and may selectively apply magnetic force (attraction force) to the function module 900 based on the power supply.

For example, the detachable portion 430 may be a circular electromagnet. With this configuration, the detachable portion 430 may create a uniform magnetic field over a wide area and may be stably coupled to the function module 900.

In addition, the detachable portion 430 may be arranged in pairs with a predetermined distance between them. at this time, the connection terminal 440 may be disposed between the pair of detachable portions 430. With this configuration, the pair of detachable portions 430 may be coupled to metal materials (or electromagnets) provided in the function module 900 at accurate positions, and then there is an effect of guiding the connection terminal 440 to come into contact with a corresponding terminal provided in the function module 900 at an accurate position.

The connection terminal 440 may be electrically connected to the function module 900. The connection terminal 440 may be electrically connected by coming into contact with the corresponding terminal provided in the function module 900.

In this embodiment, the connection terminal 440 may be configured of a terminal capable of supplying power to the function module 900 and a terminal capable of transmitting and receiving signals to and from the function module 900, which are arranged together. For example, the connection terminal 440 may be provided with a pogo pin including two power pins and four signal pins.

With this configuration, power from the robot body 100 may be supplied to the function module 900 through the connection terminal 440. In addition, the robot body 100 may be configured to transmit and receive electric signals to and from the function module 900 through the connection terminal 440.

Meanwhile, the detailed description of the function module 900 will be described later.

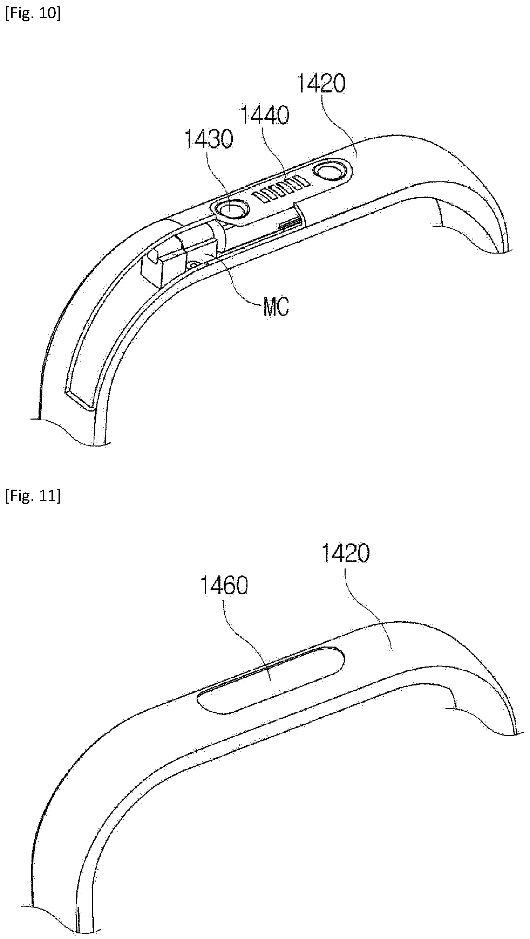

FIGS. 10 and 11 are views to describe another embodiment of the arm in the robot according to the present invention.

Referring to FIGS. 10 and 11, the arm 1400 according to this embodiment will be described as follows.

To avoid repeated description, except for the contents specifically described in this embodiment, the configuration and effects are the same as those of the robot 1 according to the above embodiment, and thus can be used.

The arm 1400 of this embodiment may further include a terminal rotation portion 1460 and a switching motor MC configured to provide rotational force to the terminal rotation portion 1460.

The terminal rotation portion 1460 may be rotatably coupled to the connecting portion 1420. As one example, the terminal rotation portion 1460 may be formed in a plate shape with a predetermined thickness, and the detachable portion 1430 and the connection terminal 1440 may be disposed on one surface of the terminal rotation portion 1460.

The terminal rotation portion 1460 may define the exterior of the arm 1400 together with the connecting portion 1420. A shaft coupled to the connecting portion 1420 may be provided on both longitudinal ends of the terminal rotation portion 1460.

The switching motor MC may be connected to the terminal rotation portion 1460 and configured to provide rotational force to the terminal rotation portion 1460. Specifically, the final output end of the shaft or gear of the switching motor MC may be connected to the terminal rotation portion 1460.

With this configuration, when the switching motor MC is operated, the terminal rotation portion 1460 may be rotated.

When the terminal rotation portion 1460 is rotated, the exposed surface may be switched. Specifically, the terminal rotation portion 1460 may have one surface on which the detachable portion 1430 and the connection terminal 1440 are arranged may be exposed to the outside. When the terminal rotation portion 1460 is rotated, the detachable portion 1430 and the connection terminal 1440 may be hidden in the inner space of the connecting portion 1420.

With this configuration, if the coupling between the arm 1400 and the function module 900 is unnecessary, the detachable portion 1430 and the connection terminal 1440 may be hidden inside the connecting portion 1420.

Especially, if the robot 1 falls down, the arm 1400 may be rotated so that the connecting portion 1420 needs to touch the ground. At this time, as they come into contact with the ground, the detachable portion 1430 and the connection terminal 1440 might become contaminated or damaged.

Accordingly, in the arm 1400 of this embodiment, it is possible to prevent the detachable portion 1430 and the connection terminal 1440 from being exposed to the outside through the rotation of the terminal rotation portion 1460. In addition, it is possible to prevent contamination or damage of the detachable portion 1430 and the connection terminal 1440.

### Robot Mask:

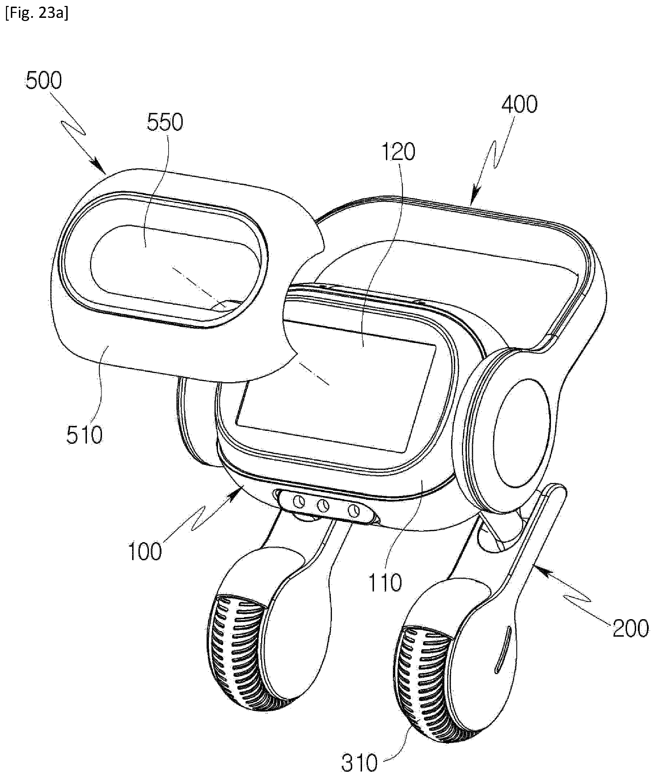

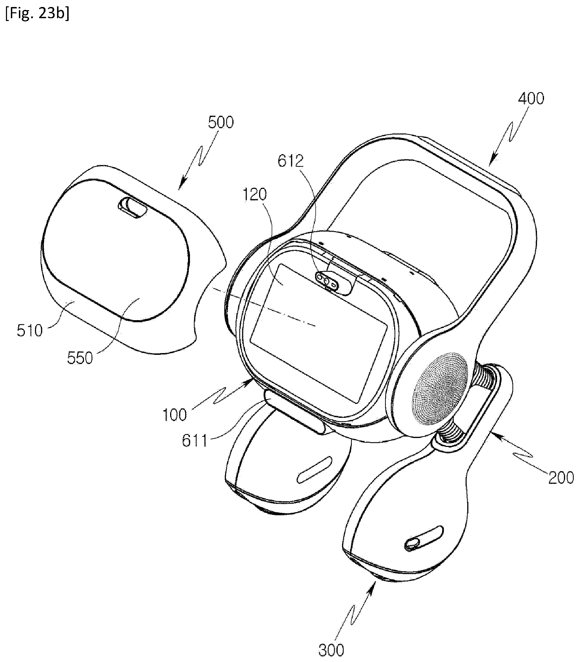

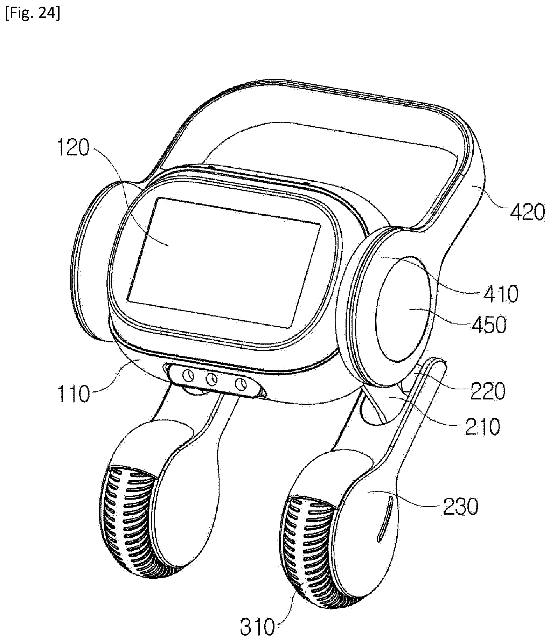

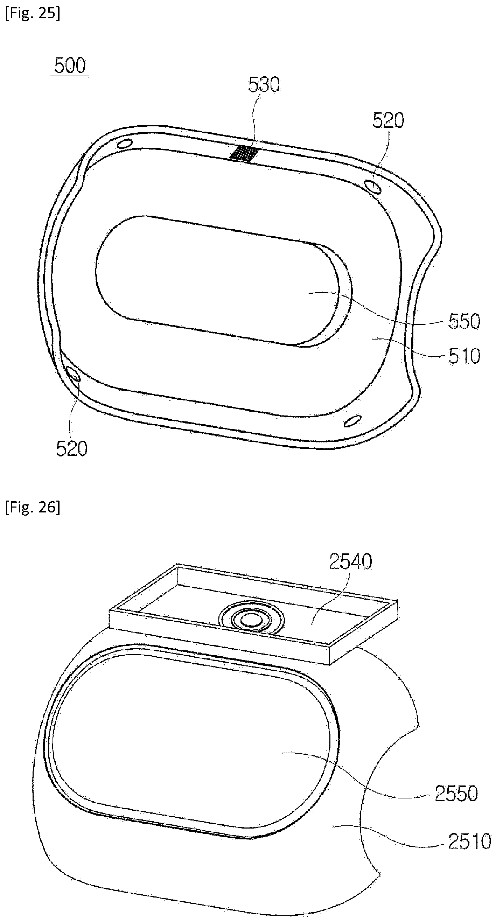

FIGS. 23a and 23b are views to describe the coupling relationship between a robot mask and a robot body in a robot according to one embodiment of the present invention. FIG. 24 is a view to describe a state in which a robot mask is separated in a robot according to one embodiment of the present invention. FIG. 25 is a view to describe the structure of a robot mask in a robot according to one embodiment of the present invention.

As shown in FIGS. 23a to 25, the robot 1 according to one embodiment may further include the robot mask 500.

The robot mask 500 may be detachably coupled to the robot body 100 and may cover the display 120. The robot mask 500 may be coupled to the robot body 100 and configured to define the exterior of the robot 1.

The robot mask 500 may include a mask body 510, a coupling magnet 520, a mask communication unit 530, a mask function unit 540, and a window 550.

The mask body 510 may define the exterior of the robot mask 500. For example, the outer surface of the mask body 510 exposed to the outside may be formed as a curved surface with a predetermined curvature with respect to the state where the robot mask 500 and the robot body 100 are coupled to each other.

The inner surface of the mask body 510 facing the robot body 100 may be formed in a shape corresponding to the shape of the robot body 100. For example, the inner surface of the mask body 510 may be formed in a flat shape corresponding to the shape of the display 120, and the outer surface may have a lateral wall protruding to partially accommodate the body housing 110. Accordingly, the inner surface of the mask body 510 may be formed in a shape of an oval flat surface and a lateral wall surrounding it.

A coupling magnet 520 may be provided in the mask body 510 and detachably coupled to the robot body 100.

Specifically, at least one coupling magnet 520 may be disposed on a lateral wall protruding from the inner surface of the mask body 510. For example, four coupling magnets 520 may be provided. With this configuration, even if shaking occurs in the robot body 100, at least one coupling magnet 520 may be in contact with the robot body 100, thereby preventing the robot mask 500 from being separated from the robot body 100.

In addition, the coupling magnet 520 may be detachably coupled to the robot body 100 by generating a magnetic force (attraction force). With this configuration, the coupling magnet 520 may couple the body housing 110 and the mask body 510 through the magnetic force. When the user applies an external shock with a predetermined size or more, he or she can decouple the body housing 110 and the mask body 510 from each other.

The mask communication unit 530 may be disposed in the mask body 510, and configured to transmit and receive information with the robot body 100. Specifically, the mask communication unit 530 may be configured to communicate with the communication unit 710 provided in the robot body 100.

The mask communication unit 530 may support wireless communication with the robot body 100. A short-range communication module may be provided as the wireless communication module for supporting wireless communication.

The short-range communication may be NFC (Near Field Communication), for example.

Information about the shape of the robot mask 500 and the functions provided in the robot mask 500 may be transmitted to the robot body 100 through the mask communication unit 530. In addition, the mask communication unit 530 may be configured to receive a control command of a controller 700 provided in the robot body 100.

Accordingly, the controller 700 may control the mask function unit 540 of the robot mask 500 through the communication between the mask communication unit 530 and the communication module 710.

Meanwhile, the robot mask 500 may receive power from the robot body 100. Although not shown, the robot mask 500 may include a terminal electrically connected to the robot body 100.

When it is coupled to the robot body 100, the robot mask 500 may further include the mask function unit 540 configured to provide functions to the robot body 100.

The mask function unit 540 may be provided in the mask body 510. For example, the mask function unit 540 may be disposed on the upper portion of the mask body 510. That is, while the robot mask 500 is coupled to the robot body 100, at least a portion of the mask function unit 540 may be arranged farther from the ground than the robot body 100.

With this configuration, when the user looks at the robot 1, the mask function unit 540 may be clearly seen by the user. In addition, when the user reaches out to the robot 1, the user's hand can easily reach the mask function unit 540.

The mask function unit 540 may be provided in various shapes depending on functions.

When a plurality of robot masks 500 including different mask function units 540, respectively, is provided, the user may add or change services provided by the robot 1 by replacing the robot mask 500 as needed.

As one example, when the robot mask 2500 including a mask function unit 2540 according to a first embodiment is coupled to the robot body 100, the robot 1 may provide a service configured to charge the user's mobile phone, carry it to a desired place, and operate the mobile phone based on a voice command (see FIG. 26).

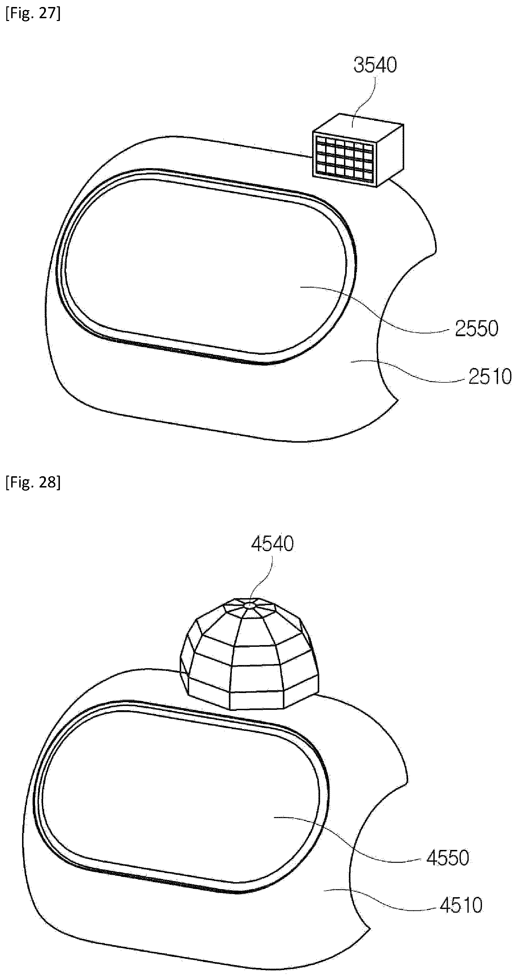

As another example, when the robot mask 3500 including a mask function unit 3540 according to a second embodiment is coupled to the robot body 100, the robot may play the sound required by the user through the speaker (see FIG. 27).

As a further example, when the robot mask 4500 including a mask function unit 4540 according to a third embodiment is coupled to the robot body 100, the robot 1 may provide the necessary atmosphere at a party or the like through lighting devices (see FIG. 28).

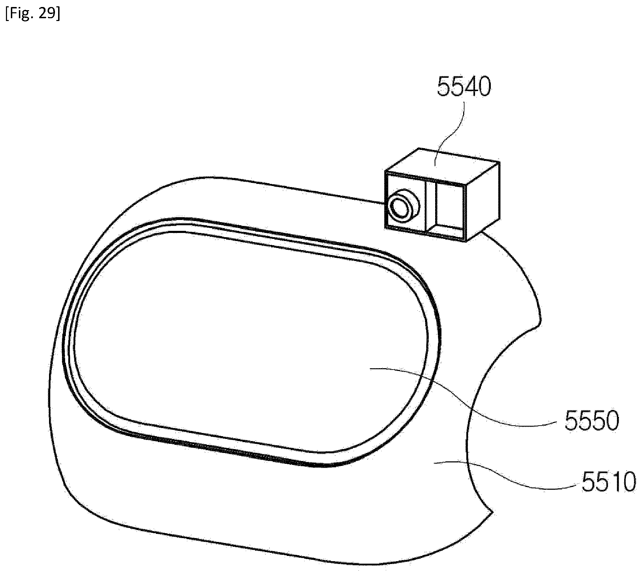

As a still further example, when the robot mask 5500 including a mask function unit 5540 according to a fourth embodiment is coupled to the robot body 100, the robot 1 may provide a service of taking pictures or videos through the camera (see FIG. 29).

Hereinafter, referring to each drawing, the service providing of the robot mask 500 provided in the robot 1 according to the embodiments will be described.

FIG. 26 is a view to describe the first embodiment of the robot mask.

As shown in FIG. 26, the mask function unit 2540 may be a carrier assembly.

The carrier assembly may include a storage compartment for storing items. Specifically, the soring compartment may be formed in a box shape with an open top and an inner space.

The robot 1 may carry the items stored in the inner space of the storage compartment.

The robot 1 may move based on the user's voice and transport the items stored in the storage compartment to a required location.

Specifically, the robot 1 can move and transport the items based on a command to move them to a specific location in the house after the user puts items on the storage compartment.

The robot 1 may move and transport the items stored in the storage compartment to the required location based on a preset algorithm.

Specifically, when recognizing that an object with a predetermined weight or more inside the storage compartment is placed in the storage compartment, the robot 1 may move to a specific location and return to the original location when the weight is removed, thereby continuously delivering the object to a specific location (continuously delivering drinks, food, etc. from the kitchen to the dining table).

A pressure sensor (not shown) including a load cell may be provided on a lower surface of the storage compartment to detect the weight of the object.

An anti-slip pad (not shown) may be disposed on the lower surface of the storage compartment to prevent stored object from slipping. The anti-slip pad may be made of a material with strong friction, such as PU (Polyurethane), which is mainly composed of silicone or artificial leather with excellent anti-slip properties, but the embodiment is not limited thereto.

The anti-slip pad may have a plurality of protrusions made of a material with strong friction, such as PU (polyurethane), which is mainly composed of silicone or artificial leather, to further maximize friction.

A wireless charging device (not shown) configured to charge the user's mobile phone or other terminal may be disposed on the lower surface of the storage compartment. The user's mobile phone or other terminal may be mounted on the lower surface of the storage compartment and charged wirelessly. A power transmitter (not shown) configured to transmit power wirelessly may be provided on the lower surface of the storage compartment.

The wireless power transmission and reception method is not limited, and examples of possible methods may include magnetic induction, magnetic resonance, and microwave methods. If the wireless power transmission method is a magnetic induction method or a magnetic resonance method, the power transmitter may be a transmitting coil. If it is a microwave method, the power transmitter may be a transmitting antenna.

When the robot 1 uses the carrier assembly, a device requiring wireless charge such as a mobile phone may be charged via the storage compartment, thereby providing convenience to the user as it does not need to utilize a separate charging device.

A concave (not shown) for accommodating a mobile phone may be formed on the lower surface of the storage compartment.

The concave formed on the lower surface of the storage compartment may function together with the anti-slip pas to prevent the mobile phone from slipping, thereby allowing it to be stored more stably.

A light-emitting unit (not shown) may be disposed on the outside of the carrier assembly and configured to allow the user to visually check the wireless charging level of the mobile phone stored inside the storage compartment.

For example, the light emitting unit (not shown) may be disposed on the front surface of the carrier assembly and configured to be luminescent red when charging and blue when fully charged, thereby allowing the user to visually check the status of the mobile phone.

On the lower surface of the storage compartment may be provided a short-range communication module (not shown) or a long-range communication module (not shown) for communication with the stored mobile phone.

The robot 1 may transmit and receive information by communication with the stored mobile phone through the short-range communication module or long-range communication module disposed on the lower surface of the storage compartment.

In the storage compartment may be provided a display (not shown), a camera (not shown), a microphone (not shown) or a speaker (not shown).

Detailed description of the display (not shown), microphone (not shown), or speaker (not shown) which may be provided in the storage compartment will use the description of the display 120, the microphone 140 or the speaker 450.

The robot may play sound via the speaker based on information received from the mobile phone stored in the storage compartment so that the user can hear it.

For example, the robot 1 may move near the user when a call comes in to the mobile phone sored in the storage compartment, thereby allowing the user to make a voice or video call without directly operating the mobile phone.

For example, the robot 1 may play a video and/or audio that the mobile phone can play based on the user's instructions, thereby allowing the user to listen to music or watch the video without directly operating the mobile phone.

FIG. 27 is a view to describe the second embodiment of the robot mask.

As shown in FIG. 27, the mask function unit 3540 may be a speaker assembly.

The speaker assembly may include a speaker configured to provide audio sound.

The speaker may be configured to transmit information of the robot 1 as sound. The source of the sound transmitted by the speaker may be sound data previously stored in the robot 1. For example, the prestored sound data may be voice data of the robot. For example, the prestored sound data may be an alarm sound guiding the status of the robot.

Meanwhile, the source of the sound transmitted by the speaker may be sound data received via the mask communication unit 530. That is, the speaker assembly may be sound data of the controller 700 received via the mask communication unit 530.

With this configuration, the speaker provided in the robot mask 3500 according to this embodiment may be configured to transmit sound together with the pair of speakers 450 provided in the arm 400. For example, the speaker provided in the robot mask 3500 may be a woofer speaker.

Accordingly, when the robot mask 3500 including the speaker assembly is coupled to the robot body 100, the pair of speakers 450 may function as left and right speakers, respectively, and the speaker provided in the robot mask 3500 may function as a woofer speaker configured to reproduce low sound.

Therefore, according to this embodiment, when the robot mask 3500 including the speaker assembly is coupled to the robot body 100, the robot 1 may provide 2.1 channel speaker function.

FIG. 28 is a view to describe the third embodiment of the robot mask.

As shown in FIG. 28, the mask function unit 4540 may be a mirror ball assembly.

The mirror ball assembly may include a lighting device configured to emit light.

The lighting device may include a plurality of light sources. For example, the lighting device including the plurality of light sources may be formed in a circular shape and configured to provide various colored light in various directions.

The mirror ball assembly may include a lighting motor (not shown) configured to provide power to rotate the lighting device up and down or left and right, thereby controlling the operation of the lighting device.

Meanwhile, the mirror ball assembly be configured to receive a control command from the controller 700 via the mask communication unit 530.

Accordingly, when the robot mask 4500 including the mirror ball assembly is coupled to the robot body 100, not only the sound source may be played through the speaker 450 but also the operation of the lighting device may be controlled based on the sound source, and the operation of the lighting device may be controlled based on the user's movement information, thereby providing an effect of stimulating the atmosphere at an event place, various parties, clubs, etc.

FIG. 29 is a view to describe the fourth embodiment of the robot mask.

As shown in FIG. 29, the mask function unit 5540 may be a camera assembly.

The camera assembly may include a camera configured to take photographs or videos.

The camera may recognize the location of the user by capturing the front of the robot 1. For this purpose, the camera may include an RGB module and a Depth module.

The depth module may obtain depth information of an image. For example, the depth information may be obtained by obtaining traveling time information by measuring the delay or phase sift of a modulated optical signal for all pixels of the captured image.

The RGB module may obtain a color image (image video). Edge characteristics, color distribution frequency characteristics (or wavelet transform) may be extracted from the color image.

The robot 1 may obtain distance information on a target object to be recognized through the depth information from the front image captured by the camera, and may recognize whether the user is present in front and/or the location of the user by calculating edge characteristics extracted from the color image.

The camera may take a picture of the user based on the user's voice command. For example, if the user commands to take a picture by voice, the camera may take a picture. In addition, when the user commands to take a video by voice, the camera may start to take a video. When the user commands to end recording video by voice, the camera may stop recording video.

At this time, the robot 1 may recognize the user's location and move while following the user. In addition, the robot 1 may change the position and angle of the camera toward the user's face.

According to this embodiment, the robot 1 may provide a service that follows the user and takes pictures based on the user's commands.

Meanwhile, the robot mask 500 according to one embodiment may include the window 550 configured to expose the image displayed on the display 120 to the outside, when it is coupled to the robot body 100.

The window 550 may be disposed on the mask body 510. Specifically, the window 550 may be disposed by penetrating the mask body 510, and when the robot mask 500 is coupled to the robot body 100, the window 550 may be disposed at a position facing the display 120.

The window 550 may be made of a material that allows light to pass through. For example, the window 550 may be made of a transparent material.

Meanwhile, when the robot mask 500 is coupled to the robot body 100, the display 120 may display a face and expressions.

The robot 1 may display the shape of the face such as eyes, nose and mouth on the display 120 to allow the user to feel that the robot is expressing emotions.

The robot 1 may describe facial expressions by displaying preset images on the display 120, thereby allowing the user to perceive that the robot is expressing emotions.

As one example, when the user returns home, the robot 1 may display a smiling face on the display 120 to express its welcoming.

As another example, when the robot 1 detects a cliff and escapes the risk of falling, the robot 1 may display a surprised face and surprised eye expression on the display 120.

As a further example, when the user calls the robot 1, the robot may display a curious facial expression while looking at the user on the display 120. The robot 1 may be set to detect the call and respond when the user calls the robot with a specific pronunciation.

As a still further example, when the user 1 cannot understand the user's command, the robot 1 may display a curious facial expression along with a symbol such as "?" on the display 120.

As a still further example, when the user continuously commands the robot 1 to provide services, the robot may display a distressed facial expression along with a picture showing sweat.

As a still further example, when the user does not issue a command to the robot 1 for a preset time period, the robot may display a sleeping facial expression.

In addition to the examples above, the robot may express various emotions on the display 721, and the expressions that can be displayed may be improved or added through software updates, etc.

In this way, the robot may provide a service of a pet robot that shows emotions to the user and communicates with the user, and it has an effect of providing emotional stability to the user.

The robot 1 may visually express emotions by displaying facial expressions on the display 120 as described above, and may also express emotions through voice output from the speaker 450.

For example, it is possible to output sounds such as laughter and surprise in response to the facial expressions displayed on the display 120.

In addition, as described above, the robot may visually display emotions by displaying facial expressions on the display 120 and may also show emotions by rotating the arm 400.

For example, the robot 1 may show emotions by shaking the arm 400 while displaying a smiling expression on the display 120.

Meanwhile, the shape displayed on the display 120 may change when the robot mask 500 is coupled based on the shape of the robot mask 500.

Specifically, the controller 700 of the robot 1 may receive information about the shape of the mask 500 via the mask communication unit 530. For example, each robot mask 500 has information about its shape recorded on it, and the controller 700 may receive the information about the shape of the robot mask 500 from the mask communication unit 530 of the robot mask 500. At this time, in the memory 720 may be stored graphic user interface (hereinafter, GUI) information based on the shape of each mask 500. In addition, the controller 700 may control the display 120 to display a GUI corresponding to the shape of the robot mask 500. Accordingly, while the robot mask 500 and the robot body 100 are coupled, the display 120 may display GUI and the GUI displayed on the display 120 may pass through the window 500 to be visible from the outside of the robot mask 500.

Meanwhile, the user may directly select GUI through an input unit 125. The controller 700 may control the display 120 to display the GUI input by the user.

With this configuration, the user may purchase a robot mask 500 that suits his or her taste or customize the appearance of the robot 1 by selecting a GUI of his or her choice.

### Function Module:

The robot 1 may include the function module 900. The function module 900 may be coupled to the robot body 100 through the arm 400 to provide various functions to the robot 1.

For example, the function module 900 may be detachably coupled to the arm 400.

Although not shown, the function module 900 may include a structure corresponding to the detachable portion 430 and the connection terminal 440. For example, the function module 900 may include a detachable portion detachably coupled to the detachable portion 430 of the arm 400. In addition, the function module 900 may include a corresponding terminal (not shown) corresponding to the connection terminal 440 of the arm 400. The corresponding terminal may be configured to receive power from the robot body 100 by coming into contact with the connection terminal 440, and transmit and receive an electric signal with the robot body 100.

As another example, the function module 900 may be detachably coupled to the robot body 100. The function module 900 may be detachably coupled to the lower portion of the robot body 100. Specifically, the function module 900 may be coupled to a module coupling portion 150 disposed in the lower portion of the robot body 100.

Especially, the robot 1 of the present invention is a two-wheeled robot in which a space is formed between the pair of wheels 310 and the leg part 200 to receive the function module 900 therein. Even in the state where the robot body 100 is coupled to the function module 900, the overall volume is not increased advantageously.

In addition, through this arrangement, when the function module 900 is coupled to the robot body 100, the function module 900 as well as the pair of wheels 310 may come into contact with the ground. The number of the points where the ground B and the robot 1 are supported by coming into contact with each other and the supported area may be increased. Accordingly, due to the function module 900 of the present invention coupled to the robot body 100, there is an effect of maintaining the balance of the robot 1.

Although not shown, the function module 900 may include a structure corresponding to the module coupling portion 150 of the robot body 100. For example, the function module 900 may include a coupling portion 930 detachably coupled to the module coupling portion 150 of the robot body 100. In addition, the function module 900 may include a corresponding terminal corresponding to the terminal of the robot body 100. The corresponding terminal may receive power from the robot body 100 by coming into contact with the terminal of the robot body 100, and configured to transmit and receive an electric signal with the robot body 100.

Although not shown, the function module 900 may include a lamp. The lamp may be configured to notify the location of the function module 900 by emitting light. For example, the lamp may be a light emitting diode IR LED. With this configuration, an IR sensor 620 provided in the robot body 100 may detect the location of the function module 900, and the robot body 100 may move toward the function module 900.

The function module 900 may include various configurations based on functions.

When each of the different function modules 900 is provided, the user may replace the function module 900 to add or change the service the robot 1 of the present invention provides.

As one example, as shown in FIG. 19, the function module 900 may be a transporting module 910. The transporting module 910 may include a support plate for supporting an object and a transport wheel coupled to the lower portion of the support plate and configured to roll over the ground.

The support plate may allow an object put thereon. For example, the support plate may be formed in a block shape with a predetermined thickness and provide a space formed on the upper surface to allow an object put thereon.

In addition, an anti-slip pad may be disposed on the upper surface of the support plate to prevent the object put thereon from slipping. The anti-slip pad may be made of a material with strong friction, such as PU (polyurethane), which is mainly composed of silicone or artificial leather, which are excellent for anti-slip, but the embodiment is not limited thereto.

A plurality of protrusions made of a material with strong friction such as silicone or PU mainly composed of artificial leather may be arranged on the anti-slip pad, thereby maximizing friction.

The transporting wheel may be coupled to the lower portion of the support plate and configured to roll.

Meanwhile, according to an embodiment, the transporting module 910 may further include a motor (not shown) configure to provide a driving force to the transporting wheel. When the motor of the transporting module 910 is operated, there is an effect of moving a heavier object.

Meanwhile, in this embodiment, the transporting module 910 may be coupled to the rear portion of the robot body 100. When the transporting module 910 is coupled to the rear portion of the robot body 100, the robot body 100 may be arranged more forward than the transporting module 910, thereby guiding the moving direction of the transporting module 910. This may make it appear, when viewed by the user, that the robot body 100 is pulling and moving the transporting module 910 through the arm 400.

In contrast, in this embodiment, the transporting module 910 may be coupled to the front portion of the robot body 100. When the transporting module 910 is coupled to the front portion of the robot body 100, the robot body 100 may be arranged more rearward than the transporting module 910, thereby pulling and moving the transporting module 910.

As another example, as shown in FIG. 20, the function module 900 may be a cleaning module 920.

The cleaning module 920 may include a module body, a suction nozzle, and a dust bin. With this configuration, when the function module 900 is coupled to the arm 400, the robot 1 may perform dry-cleaning.

The module body may be detachably coupled to the arm 400. For example, the module body may be formed in a hexahedral shape with a predetermined volume, and a path for sucking dust may be formed inside.

A suction nozzle (not shown) configured to suck dust may be provided on the bottom surface of the module body. The dust bin may be disposed inside the module body to store the sucked dust. A motor (not shown) configured to provide suction force of air may be provided inside the module body. At this time, a wheel may be provided on the bottom surface of the module body. An agitator may be provided on the bottom surface of the module body. In addition, a side brush may be further provided on the bottom surface of the module body. A motor configured to provide driving force to the agitator and/or wheel may be further provided inside the module body.

Meanwhile, in this embodiment, the cleaning module 920 may be coupled to the front portion of the robot body 100. When the cleaning module 920 is coupled to the front portion of the robot body 100, the robot body 100 may be arranged more rearward than the cleaning module 920, thereby moving together with the cleaning module 920. The cleaning module 920 may change the moving direction based on the motion of the robot body 100. This makes it appears that the robot body 100 is pulling the cleaning module 920 and cleaning through arm 400, when viewed by the user.

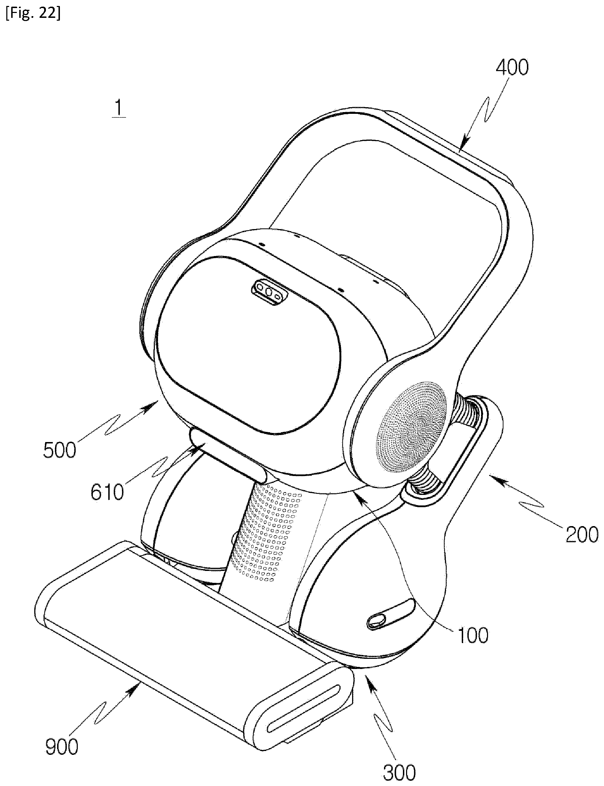

Meanwhile, as shown in FIG. 22, the function module 900 according to another embodiment may be coupled to the lower portion of the robot body 100. At this time, the robot body 100 may be arranged more upward than the function module 900, thereby moving together with the function module 900. This makes it appear that the robot body 100 is getting on the function module 900 and cleaning, when viewed by the user

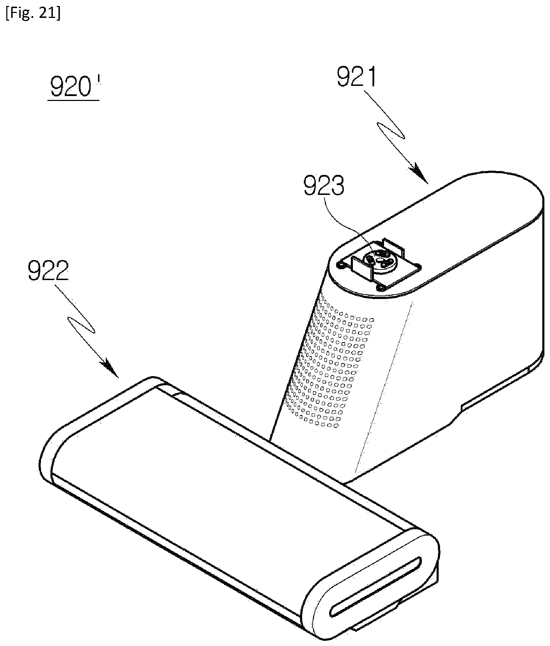

At this time, as shown in FIG. 21, the function module 900 may be cleaning module 920'. The cleaning module 920' may include a module body 921, a suction nozzle 922, and a coupling portion 923.

The module body 921 may be detachably coupled to the robot body 100 through the coupling portion 923. Although not shown, a path through which dust is sucked may be formed inside the module body 921.

The suction nozzle 922 configured to suck dust may be provided in the front portion of the module body 921. A dust bin configured to store the sucked dust may be disposed inside the module body 921. A motor (not shown) configured to provide suction force of air may be provided inside the module body 921. At this time, a wheel may be provided on the bottom surface of the module body 921.

In addition, the suction nozzle 922 may suck air and dust while moving along the ground (floor). An inlet hole may be formed on the lower surface of the suction nozzle 922. An agitator may be provided near the inlet hole. A motor may be further provided inside the module body 921 to provide driving force to the agitator and/or wheel.

The coupling portion 923 may be disposed in the upper portion of the module body 921 and coupled to the robot body 100. Specifically, the coupling portion 923 may be arranged the front upper portion inside the module body 921. The coupling portion 923 may be detachably coupled to the module coupling portion 150 of the module body 921. The coupling portion 923 may be detachably coupled to the module coupling portion 150. For example, the coupling portion 923 may include at least a portion made of a metal material or an electromagnet. As another example, the coupling portion 923 may include a hook and may be hooked to the module body 921. In this case, the coupling between the module body 921 and the robot body 100 may be strengthened.

Meanwhile, the function module 900 may be configured to be heavier at the rear than at the front where the suction nozzle 922 is positioned based on the coupling portion 923. Although not shown, the motor that is relatively heavier than other components may be disposed in the rear portion of the module body 921. In addition, although not shown, a weight to increase the weight of the functional module 900 may be additionally placed on the inner rear portion of the module body 910.

Accordingly, the function module 900 may be coupled to the robot body 100, so that it can be lifted when the robot body 100 is moved upward.

When the function module 900 is lifted by the robot body 100, the front end of the function module 900 may be lifted higher than the rear end.

Although not shown, as another example, the function module 900 may include a pair of mops rotatable with respect to a shaft and a water container configured to store water which will be supplied to the mops. With this configuration, when the function module 900 is coupled to the robot body 100, the robot may perform wet-cleaning.

Although not shown, as a further example, the function module 900 may include an arm and a gripper. With this configuration, when the function module 900 is coupled to the robot body 100, the gripper may be configured to lift a mobile phone or a big object and transport it to another place.

### Control Configuration:

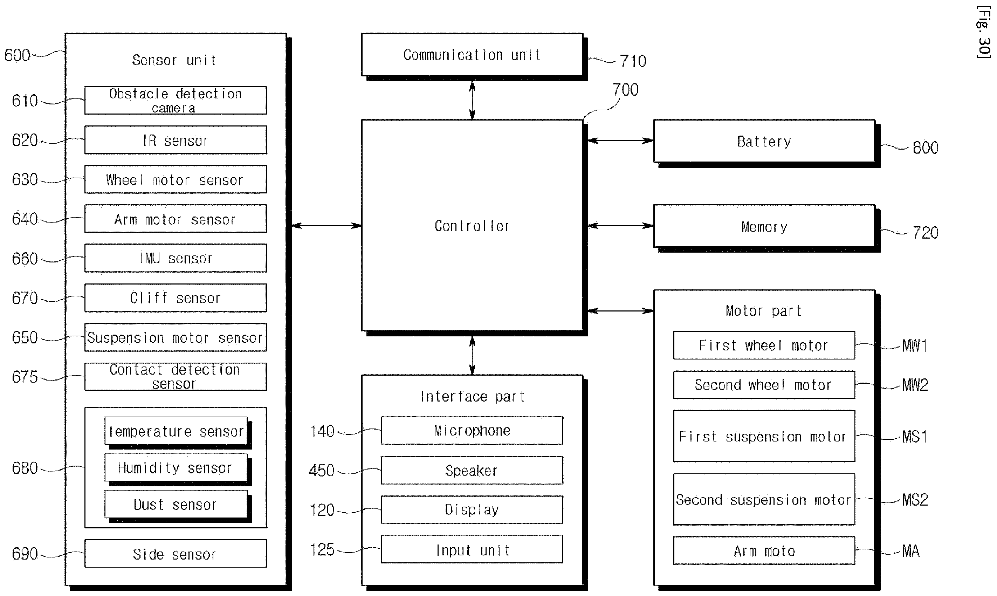

FIG. 30 is a block view to describe the control configuration of the robot according to one embodiment.

Referring to FIG. 24, the robot 1 according to the embodiment may include a sensor unit 600, a controller 700, a communication unit, a memory 720, a battery 800, a motor part, and an interface part.

The components shown in the block view of FIG. 24 are not essential in implement the robot, and the robot 1 described in the present invention may include more or less ones than the components described above.

First, the controller 700 may be configured to control the general operation of the robot 1. The controller 700 may control the robot 1 to perform various functions based on prestored setting information stored in the memory 720.

The controller 700 may be disposed in the robot body 100. Specifically, the controller 700 may be mounted on PCB provided inside the body housing 110.

The controller 700 may include all kinds of devices capable of processing data such as a processor. Here, the processor may mean a data processing device embedded in a hardware including a physically structured circuit to execute functions expressed by a code or command included in a program, for example. As one example, the controller may include processing devices such as a microprocessor, a central processing unit (CPU), a processor core, a multiprocessor, an application-specific integrated circuit (ASIC), and a field programmable gate array (FPGA), but the scope of the present invention is not limited thereto.

The controller may be configured to receive information about the external environment of the robot 1 from at least one of the components of the sensor unit 600. At this time, the information about the external environment may be information about the temperature, humidity, and amount of dust in the room where the robot is moving, for example. Or, it may be cliff information, or it may be indoor map information. Here, the information about the external environment is not limited thereto.

The controller 700 may be configured to receive information about the current status of the robot from at least one of the components of the sensor unit 600 which will be described later. At this time, the current status may be information about inclination of the robot body 100 or it may be information about the separation status between the wheels 310 and the ground. Or, for example, it may be position information about the wheel motor MW. Or, for example, it may be position information of the suspension motor MS. Here, the information about the current status of the robot 1 is not limited to the examples described above.

The controller 700 may transmit a driving control command to at least one of the components of the motor part which will be described later. For example, the controller 700 may control the rotation of the wheel motor MW to move the robot 1. Or, for example, the controller 700 may control the rotation of the wheel motor MW to maintain the horizontal posture of the robot 1. Or, for example, it may control the rotation of the suspension motor MS to maintain the horizontal posture of the robot 1.

The controller 700 may receive an input of the user's command through at least one of the components of the interface part which will be described later. For example, the command may be a command configured to turn on and off the robot 1. Or, for example, the command may be configured to control the various functions of the robot 1 manually.

The controller 700 may output information related to the robot 1 through at least one of the components of the interface part. For example, the output information may be visual information or auditory information.

The motor part may include at least one motor, and configured to provide a driving force to the components connected to the at least one motor.

The motor part may include a wheel motor MW configured to provide a driving force to the left and right wheels 310. Specifically, the motor part may include a first wheel motor MW1 configured to transmit driving force to the wheel 310 disposed on one side in the left-right direction, and a second wheel motor MW2 configured to transmit driving force to the wheel 310 disposed on the other side in the left-right direction.

The wheel motors MW may be mounted in the wheel part 300. Specifically, the wheel motors MW may be mounted inside the third link 230.

The wheel motor MW may be connected to the wheel 310. Specifically, the shaft of the first wheel motor MW1 or the final output end of the gear may be connected to the wheel 310 mounted on one side in the left-right direction. The shaft of the second wheel motor MW2 or the final output end of the gear may be connected to the wheel 310 mounted on the other side in the left-right direction. The wheel motor of each of the left and right sides may be driven based on the control command of the controller 700, and the robot 1 may be moved along the ground by the rotation of the wheel 310 along with the rotation of the wheel motor MW.

The motor part may include a suspension motor MS configured to provide driving force to the left and right leg parts 200. Specifically, the motor part may include a first suspension motor MS1 configured to transmit driving force to the leg part 200 mounted on one side in the left-right direction, and a second suspension motor MS2 configured to transmit driving force to the leg part 200 mounted on the other side in the left-right direction.

The suspension motor MS may be mounted in the robot body 100. Specifically, the suspension motor mS may be mounted inside the body housing 110.

The suspension motor MS may be connected to the first link 210. Specifically, the shaft of the first suspension motor MS1 or the final output end of the gear of the first suspension motor MS1 may be connected to the first link 210 disposed on one side in the left-right direction. The shaft of the second suspension motor MS2 or the final output end of the gear of the second suspension motor MS2 may be connected to the first link 210 mounted on the other side in the left-right direction. Each of the suspension motors MS on the left and right sides may be rotatable based on the control command of the controller 700. The first link 210 may be rotated along with the rotation of the suspension motor MS, and as the third link 230 connected to the first link 210 is rotated, the angle between the first link 210 and the third link 230 may change as a result.

Through this, the robot 1 is capable of lifting or lowering the wheel 310 and maintaining a horizontal posture when climbing an obstacle or driving on a curved surface. Alternatively, the robot body 100 is capable of moving downward or upward.

The motor part may include an arm motor MA configured to provide driving force to the arm 400.

The arm motor MA may be mounted in the robot body 100. Specifically, at least one arm motor MA may be mounted inside the body housing 110.

The arm motor mA may be driven and rotated based on the control command of the controller 700. Along with the rotation of the arm motor MA, the rotation coupling portion 410 may be rotated. As the connecting portion 420 integrally formed with the rotation coupling portion 410 is rotated, the arm 400 may be pivotably moved with respect to the robot body 100.

Through this, the robot 1 is capable of rotating the arm 400, and may be coupled to the function module 900 by the rotation of the arm 400. Or, the robot 1 may rotate the arm 400 so that the arm 400 can touch the ground.

The sensor unit 600 may include at least one sensor, and each sensor may be configured to measure or detect information about the external environment of the robot 1 and/or the current status of the robot 1.

The sensor unit 600 may include an obstacle detection camera 610.

The obstacle detection camera 610 may be configured to detect obstacles existing in the room where the robot is moving and to map the structure of the room.

To this end, the obstacle detection camera 610 may be provided on the front portion of the robot body 100. Specifically, the obstacle detection camera 610 may be disposed on the front side of the body housing 110.

Meanwhile, a plurality of obstacle detection cameras 610 may be arranged according to embodiments. For example, a first detection camera 611 may be arranged in the front lower portion of the body housing 110, and a second detection camera 612 may be arranged in the front upper portion of the body housing 110. With this configuration, the obstacle detection camera 610 may detect an obstacle or person positioned in front of the robot 1.

The obstacle detection camera 610 may detect an obstacle T and a distance with the obstacle T. For example, the first detection camera 611 may be a Depth camera.

The obstacle detection camera 610 may be configured to capture indoor images while moving to perform SLAM (Simultaneous Localization and Mapping). For example, the second detection camera 612 may be an RGB camera.

The depth camera and the RGB camera may be configured to calculate distance by calculating the time it takes for the irradiated light to reflect and return.

The controller 700 may implement SLAM based on the information about the external environment captured by the obstacle detection camera 610 and the information about the current location of the robot 1.

Meanwhile, the method in which the robot 1 implements SLAM may be a method implemented only by the obstacle detection camera 610, but the embodiments are not limited thereto. For example, the robot 1 may implement SLAM by utilizing a sensor additionally provided. The added sensor may be a laser distance sensor LDS, for example.

The sensor unit 600 may include an IR sensor 620 configured to sense infrared rays.

IR sensor 620 may be an IR camera configured to detect infrared light.

The IR sensor 620 may be arranged in the robot body 100. Specifically, the IR sensor 620 may be arranged in the front portion of the body housing 110. The IR sensor 620 may be disposed left and right of the obstacle detection camera 610.

Meanwhile, a plurality of IR sensors 610 may be provided according to embodiments. For example, a first IR sensor 621 may be arranged in the front lower portion of the body housing 110, and a second IR sensor 622 may be arranged in the rear portion of the body housing 110. With this configuration, the positions of light sources arranged in various directions may be detected.

The IR sensor 620 may be disposed close to the obstacle detection camera 610. For example, the first IR sensor 621 may be disposed underneath the first obstacle detection camera 611.

With this arrangement, the IR sensor 620 may detect the light irradiated by the lamp of the function module 00 or the robot charging stand (not shown), and when the robot body 100 approaches the lamp, the obstacle detection camera 610 may detect the shape of the function module 900 or the robot charging stand (not shown).

The IR sensor 620 may detect the infrared light emitted by an IR LED provided in a specific module and may approach the module. For example, the module may be a charging stand configured for the charging of the robot 1. For example, the module may be the function module 900 detachably provided in the arm 400.

The controller 700 may control the IR sensor to start the detection of IR LED, when the charging status of the robot 1 is a preset level or lower. The controller 700 may control the IR sensor 620 to start the detection of the IR LED when it receives a command to find a specific module from the user.

The sensor unit 600 may include a wheel motor sensor 630.

The wheel motor sensor 630 may be configured to measure the location of the wheel motor MW. For example, the wheel motor sensor 630 may be an encoder. As is well known, the encoder may detect the location of the motor and the rotation speed of the motor.

The wheel motor sensor 630 may be provided in each of the left and right wheel motors MW. Specifically, the wheel motor sensor 630 may be connected to the shaft or the final end of the gear of the wheel motor MW, and mounted inside the third link 230 together with the wheel motor MW.

The sensor unit 600 may include an arm motor sensor 640.

The arm motor sensor 640 may be configured to measure the location of the arm motor MA. As one example, the arm motor sensor 640 may be an encoder. As is well known, the encoder may detect the location of the motor and the rotation speed of the motor. As another example, the arm motor sensor 640 may be a photo sensor. As is well known, the photo sensor may measure the degree of rotation of the arm motor MA or the degree to which the arm 400 has rotated.

The arm motor sensor 640 may be disposed in the arm motor MA. Specifically, the arm motor sensor 640 may be connected to the shaft of the arm motor mA or the final end of the gear, and may be mounted in the body housing 110 or the rotation coupling portion 410, together with the arm motor MA.

The suspension motor sensor 650 may be configured to measure the location of the leg part 200. For example, the suspension motor sensor 650 may be a photo sensor. As it well known, the photo sensor may measure the degree of rotation of the suspension motor MS or the degree to which the first link 210 has rotated.

The suspension motor sensor 650 may be disposed close to the suspension motor MS. Specifically, the suspension motor sensor 650 may be mounted inside the body housing 110 together with the suspension motor MS.

The sensor unit 600 may be include an IMU sensor 660.

The IMU sensor 660 may be configured to measure the tilt angle of the robot body 100.

As is well known, the IMU (Inertial Measurement Unit) sensor 660 is a sensor that incorporates a 3-axis acceleration sensor, a 3-axis gyro sensor, and a geomagnetic sensor.

The 3-axis acceleration sensor is a sensor that detects the gravitational acceleration of an object when it is stationary. Since the gravitational acceleration varies based on the angle at which the object is tilted, the tilt angle can be obtained by measuring the gravitational acceleration. However, there is a disadvantage in that the correct value cannot be obtained when the object is in a moving acceleration state rather than a stationary state.

The three-axis gyro sensor is a sensor that measures angular velocity. When the angular velocity is integrated over time, the tilt angle is obtained. However, the angular velocity measured by the gyro sensor has continuous errors due to noise and other reasons, and these errors cause errors in the integrated value to accumulate and occur over time.

As a result, when a long time passes in a stationary standby state, the robot 1 can accurately measure the inclination by the acceleration sensor, but an error occurs by the gyro sensor. When moving, the robot 1 can accurately measure the inclination value by the gyro sensor, but the correct value cannot be obtained by the acceleration sensor.

Using the IMU sensor 660 may complement the disadvantages of the acceleration sensor and gyro sensor described above.

Hereinafter, the embodiment that the IMU sensor 660 is provided will be described.

The IMU sensor 660 may be disposed in the robot body 100. Specifically, the IMU sensor 660 may be disposed close to the controller 700. The IMU sensor 660 may be mounted on the PCB inside the robot body. To improve the measurement accuracy of the tilt angle and direction, it is preferable that the IMU sensor 660 be arranged close to the central area of the robot body 100.

The IMU sensor 660 may be configured to measure at least one of the 3-axis acceleration, 3-axis angular velocity, and 3-axis geomagnetic data of the robot body 100, and to transmit it to the controller 700.

The controller 700 may calculate the tilt direction and tilt angle of the robot body 100 by using at least one of the acceleration, angular velocity, and geomagnetic data received from the IMU sensor 660. The controller 700 may perform horizontal posture maintenance control of the robot body 100 which will be described later.

The sensor unit 600 may include a cliff sensor 670 configured to detect a cliff.

The cliff sensor 670 may be configured to detect the distance from the front ground along which the robot is moving. The cliff sensor 670 may be configured in various ways within a range that can detect the relative distance between the point where the cliff sensor 670 is formed and the ground.

For example, the cliff sensor 670 may include a light emitting portion configured to irradiate light and a light receiving portion on which reflected light is incident. The cliff sensor 670 may be an infrared sensor.

For example, the cliff sensor 670 may be disposed inside the robot body 100. Specifically, the cliff sensor 660 may be disposed inside the robot body 100.

Alternatively, the cliff sensor 670 may be disposed in the third link 230. For example, a first cliff sensor 671 may be arranged in the front lower end of the third link 230, and a second cliff sensor 672 may be arranged in the rear upper portion of the third link 230. With this configuration, the distance between the third link 230 and the wheel 310 and the ground B may be measured. In addition, it is possible to calculate the angel between the third link 230 and the ground by using the distance difference between the first cliff sensor 671 and the second cliff sensor 672.

The cliff sensor 670 may irradiate light toward the front floor surface of the robot 1. The cliff sensor 670 may detect in advance whether a cliff exists in front of the robot 1 in the direction of moving.

The light emitting portion of the cliff sensor 670 may irradiate light obliquely toward the front floor surface. The light receiving portion of the cliff sensor 670 may receive light reflected from the floor surface and incident thereon. The distance between the front floor and the cliff sensor 670 may be measured based on the difference between the time of light irradiation and the time of light reception.

If the distance measured by the cliff sensor 670 is exceeds a preset value or a present range, it may be a case where the front ground suddenly become lower. A cliff may be detected using this principle.

If a cliff is detected in front, the controller 700 may control the wheel motor MW so that the robot can move to avoid the detected cliff. At this time, the control of the wheel motor MW may be a stop control. Or, the control of the wheel motor MW may be a control of switching the direction of rotation.

The sensor unit 600 may include a contact detection sensor 675.

The contact detection sensor 675 may be configured to detect whether the wheel 310 comes into the contact with the ground.

The contact detection sensor 675 may include an TOF sensor configured to measure a separation distance between the wheel 310 of the robot 1 and the ground. The TOF sensor may be a 3D camera with TOF (Time of Flight) technology. TOF technology, as is well known, is a technology that measures the distance to an object based on the round-trip flight time of light irradiated toward the object and the reflected back.

The TOF sensor may be disposed in the wheel part 300. For example, the contact detection sensor 675 may be disposed on each of the left and right third links 230. The TOF sensor may determine whether the wheel 310 is in contact with the ground based on the distance to the ground measured by the TOF sensor. If the distance measured by the TOF sensor is less than a preset distance (or less than the lower limit of the preset distance range), it is determined that the heel is in contact with the ground. If the distance measured by the TOF sensor is greater than or equal to a preset distance (or greater than or equal to the upper limit of the preset distance range), it is determined that the wheel 310 is separated from the ground.

The contact detection sensor 675 may include a load cell configured to measure the magnitude of a force applied to some components of the robot 1.

As is well known, if force is applied to the load cell, the resistance value of the strain auge provided on the surface of the load cell may change. At this time, the size (or magnitude) of the force applied to the load cell may be measured based on the change in the resistance value.

The load cell may be provided in the leg part 200. Preferably, the load cell may be arranged in each of the left and right third lings 230. While the wheel 310 is in contact with the floor, the third link 230 may be deformed by a vertical force applied from the ground. The measured value of the load cell may be displayed as a different value from the initial value based on the deformation of the third link 230. Through this, it may be determined whether the wheel 310 is in contact with the ground.

The senso unit 600 may include an environment sensor 680.

The environment sensor 680 may be configured to measure various environmental conditions outside the robot 1 (i.e., inside the house where the robot 1 is moving). The environment sensor 680 may include at least one of a temperature sensor, a humidity sensor and a dust sensor.

As one example, the environment sensor 680 may be disposed in the robot body 100. Specifically, the environment sensor 680 may be disposed in the rear portion of the root body 100.

As another example, the environment sensor 680 may be disposed in the arm 400. Specifically, the environment sensor 680 may be disposed in the connecting portion 420.

As a possible embodiment, the information measured by the environment sensor 680 may be visually displayed on the display 120.

The sensor unit 600 may include a side sensor 690.

The side sensor 690 may be configured to measure the distance to an obstacle, including a wall surface, etc.

The side sensor 690 may be configured to detect the distance to the lateral wall surface where the robot 1 is moving. The side sensor 690 may be configured in various ways within a range that can detect the relative distance between the point where the side sensor 690 is arranged and an obstacle.

For example, the side sensor 690 may include a light emitting portion configured to irradiate light and a light receiving portion configured to allow reflected light to be incident thereon. The side sensor 690 may be an infrared sensor.

The side sensor 690 may be provided on each of the two lateral surfaces of the robot 1. For example, the side sensor 690 may be disposed on the outer surface of the third link 230 of the leg part 200.

The interface part may include at least one component for interaction between the user and the robot 1, and each component may be configured to receive an input of a command from the user and/or output information to the user.

The interface part may include a microphone 140.

The microphone 140 may be configured to recognize the user's voice and a plurality of microphones may be provided. For example, four microphones 140 may be provided on the upper portion of the body housing 110.

The voice signal received by the microphone 140 may be used to track the user's location. At this time, a sound source tracking algorithm may be applied, which is well known technology. For example, the sound source tracking algorithm may be a 3-point measurement method (triangulation method) that utilizes the time difference between multiple microphones 140 receiving the voice signal. It is the principle that location of the voice source is calculated by using the position of each microphone 140 and the speed of the sound wave.

Meanwhile, when the microphone 140 and the above-mentioned obstacle detection camera 610 cooperate with each other, the robot 1 may be implemented to find the user's location even if the user calls the robot from a distance.

The interface part may include a speaker 450.

The speaker 450 may be disposed in the arm 400. For example, the speaker 450 may be disposed in the rotation coupling portion 410 of the arm 400. The speaker 450 may be disposed at a position covering each of the left and right sides of the main body housing 110.

The speaker 450 may be configured to transmit information about the robot 1 as sound. The source of the sound transmitted by the speaker 450 may be sound data previously stored in the robot 1. For example, the prestored sound data may be a notification sound configured to notify the status of the robot 1. Meanwhile, the source of the sound transmitted by the speaker 450 may be sound data received through the communication unit 710.

The interface part may include a display 120 and an input unit 125.

The display 120 may include a display disposed on at least one module. The display 120 may be disposed on the front upper portion of the robot body 100.

The display 120 may be formed of any one of a light emitting diode (LED), a liquid crystal display (LCD), a plasma display panel, and an organic light emitting diode (OLED).

The display 120 may display information such as operating time information of the robot and power information of the battery 800.

The display 120 may display facial expressions of the robot 1. Alternatively, the display 120 may display the pupils of the robot 1. The current status of the robot 1 may be personified and expressed as emotion through the shape of the face or the shape of the pupils displayed on the display 120. For example, when the user goes out and returns hole, the display 120 may display a smiling facial expression or smiling eye shape. Accordingly, there is an effect that the user feels as if he or she is interacting with the robot 1.

The input unit 125 may be configured to receive a control command from the user to control the robot 1. For example, the control command may be a command to change various setting of the robot 1. For example, the settings may be voice volume, display brightness, power saving mode settings, etc.

The input unit 125 may be disposed on the display 120.

The input unit 125 may generate key input data input by the user to control the operation of the robot 1. To this end, the input unit 125 may include a key pad, a dome switch, a touch pad (static pressure/electrostatic), etc. In particular, when the touch pad forms a mutual layer structure with a first display, it may be referred to as a touch screen.

The communication unit 710 may be configured to transmit and receive a signal between each component inside the robot 1. The communication unit 710 may support controller area network CAN, for example. The signal may be a control command transmitted from the controller 700 to other components, for example.

The communication unit 710 may support wireless communication with other devices existing outside the robot 1. A short-range communication module or a long-range communication module may be provided as a wireless communication module for supporting wireless communication.

For example, the short-range communication may include Bluetooth communication, NFC (Near Field Communication), etc.

For example, the long-range communication may include, for example, Wireless LAN (WLAN), Digital Living Network Alliance (DLNA), Wireless Broadband (Wibro), World Interoperability for Microwave Access (Wimax), Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), IEEE 802.16, Long Term Evolution (LTE), Long Term Evolution-Advanced (LTEA), Wireless Mobile Broadband Service (WMBS), Bluetooth Low Energy (BLE), Zigbee, Radio Frequency (RF), and LoRa (Long Range), etc.

The memory 720 may be configured to store various data for driving and operating the robot 1.

The memory may store application programs to autonomous driving of the robot 1 and various related data. The memory 720 may also store each piece of data sensed by the sensor unit 600, and setting information for various settings selected or entered by the user.

The memory 720 may include a magnetic storage media or flash storage media, but the scope of the present invention is not limited thereto. Such the memory 720 may include internal memory and/or external memory, and may include volatile memory such as DRAM, SRAM, or SDRAM, nonvolatile memory such as OTPROM (one time programmable ROM), PROM, EPROM, EEPROM, mask ROM, flash ROM, NAND flash memory, or NOR flash memory, flash drives such as SSD, CF (compact flash) card, SD card, Micro-SD card, Mini-SD card, Xd card, or memory stick, or storage devices such as HDD.

The memory 720 may be provided in the controller 700 or as a separate component.

The battery 800 may be configured to supply power to other components of the robot 1.

The battery 800 may be disposed in the robot body 100. Specifically, the battery 800 may be mounted inside the body housing 110. Although not shown, the battery 800 may be arranged more rearward than the suspension motor MS.

The battery 800 may be charged by an external power supply source. For this purpose, a charging terminal 130 may be provided on one side of the robot body 100 and configured to charge the battery 800. As in this embodiment, the charging terminal 130 may be disposed in the lower portion of the robot body 100. Accordingly, the robot 1 may be easily connected to the charging stand by mounting the charging terminal 130 on the corresponding terminal of the charging stand from the top after approaching the charging station and descending.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention.

Further, although the operating effects according to the configuration of the present invention are not explicitly described while describing an embodiment of the present invention, it should be appreciated that predictable effects are also to be recognized by the configuration.

## Claims

1. A robot comprising:
a robot body configured to accommodate a motor and a battery;
a leg part provided in the robot body;
a wheel part rotatably coupled to the leg part and comprising a wheel configured to roll on the ground; and
an arm comprising a rotation coupling portion rotatably coupled to lateral surfaced of the robot body, and a connecting portion configured to connect the pair of rotation coupling portions to each other,
wherein in the arm, the rotation coupling portion and the connecting portion are integrally rotated with respect to the rotation coupling portion as a rotation axis.

2. The robot of claim 1, further comprising:
a function module coupled to the arm and configured to move along with the robot body,
wherein a connection terminal electrically connected to the function module is disposed in the connecting portion.

3. The robot of claim 1, further comprising:
a function module coupled to the arm and configured to move along with the robot body,
wherein a detachable portion detachably coupled to the function module is disposed in the connecting portion.

4. The robot of claim 1, wherein the arm is configured to support the robot body by coming into contact with the ground.

5. The robot of claim 1, wherein the leg part comprises,
a first link linked to the robot body;
a second link linked to the robot body; and
a third link linked to the first link and the second link and coupled to the wheel part, and
the radius of rotation of the arm is longer than the maximum length of the first link and shorter than the maximum length of the leg part.

6. The robot of claim 1, wherein the leg part comprises,
a first link liked to the robot body;
a second link linked to the robot body; and
a third link linked to the first link and the second link, and coupled to the wheel part, and
the arm is disposed closer to the ground than the first link and when the rotation of the wheel is stopped, the wheel and the arm support the robot body by coming into contact with the ground.

7. The robot of claim 1, wherein when at least a portion of the robot body comes into contact with the ground, the arm and the wheel are rotated and lift the robot body.

8. The robot of claim 1, wherein the leg part comprises,
a first link liked to the robot body;
a second link linked to the robot body; and
a third link linked to the first link and the second link, and coupled to the wheel part, and
when at least a portion of the third link comes into contact with the ground, the arm and the wheel are rotated and lift the robot body.

9. The robot of claim 1, further comprising:
a display disposed in the robot body and configured to display the status of the robot; and
a robot mask detachably coupled to the robot body and configured to cover the display.

10. The robot of claim 9, wherein the display is configured to change the shape displayed while the mask is coupled based on the shape of the mask.

11. The robot of claim 9, wherein the mask comprises,
a mask body coupled to the robot body; and
a mask function unit provided in the mask body and configured to provide a function to the robot body when coupled to the robot body.

12. The robot of claim 1, further comprising:
a function module detachably coupled to the robot body and configured to move along with the robot body,
wherein the function module comprises,
a module body;
a coupling portion disposed on an upper portion of the module body and coupled to the robot body, and
in the function module, a front portion where a suction nozzle is arranged is heavier than a rear portion with respect to the coupling portion.

13. A robot comprising:
a robot body configured to accommodate a motor and a battery;
a leg part coupled to the robot body and configured to support the root body by being provided in pairs;
a wheel coupled to the leg part and configured to come into contact with the ground; and
one arm pivotably coupled to both lateral surfaces of the robot body.

14. The robot of claim 13, wherein the arm is detachably coupled to the function module configured to move along with the robot body.

15. The robot of claim 13, wherein the arm is configured to support the robot body together with the wheel by coming into contact with the ground.
